(19) Europäisches Patentamt / European Patent Office / Office européen des brevets

(11) **EP 4 158 316 B1**

(12) **EUROPÄISCHE PATENTSCHRIFT**

(45) Veröffentlichungstag und Bekanntmachung des Hinweises auf die Patenterteilung:
**16.04.2025   Patentblatt 2025/16**

(21) Anmeldenummer: **21728407.4**

(22) Anmeldetag: **25.05.2021**

(51) Internationale Patentklassifikation (IPC):
**G01N 21/64** *(2006.01)*   **G02B 21/00** *(2006.01)*
**G02B 21/16** *(2006.01)*   **G02B 27/58** *(2006.01)*

(52) Gemeinsame Patentklassifikation (CPC):
**G01N 21/6458; G02B 21/0032; G02B 21/0076; G02B 21/16; G02B 27/58**

(86) Internationale Anmeldenummer:
**PCT/EP2021/063784**

(87) Internationale Veröffentlichungsnummer:
**WO 2021/239675 (02.12.2021 Gazette 2021/48)**

(54) **VERFAHREN UND VORRICHTUNG ZUM BESTIMMEN VON POSITIONEN VON MOLEKÜLEN IN EINER PROBE**

METHOD AND DEVICE FOR DETERMINING POSITIONS OF MOLECULES IN A SAMPLE

PROCÉDÉ ET DISPOSITIF DE DÉTERMINATION DE POSITION DE MOLÉCULES DANS UN ÉCHANTILLON

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.05.2020   DE 102020113998**
**23.06.2020   DE 102020116547**
**14.05.2021   EP 21173820**

(43) Veröffentlichungstag der Anmeldung:
**05.04.2023   Patentblatt 2023/14**

(73) Patentinhaber: **Abberior Instruments GmbH**
**37077 Göttingen (DE)**

(72) Erfinder:
• **DONNERT, Gerald**
**37077 Göttingen (DE)**
• **KASTRUP, Lars**
**37037 Göttingen (DE)**
• **SCHMIDT, Roman**
**37077 Göttingen (DE)**
• **WILLEMER, Winfried**
**37120 Bovenden (DE)**
• **SCHÖNLE, Andreas**
**37085 Göttingen (DE)**

(56) Entgegenhaltungen:
**US-A1- 2014 042 340**

• **WANG WENSHENG ET AL: "Stimulated emission depletion microscopy with array detection and photon reassignment", OPTICS AND LASERS IN ENGINEERING, ELSEVIER, AMSTERDAM, NL, vol. 129, 18 February 2020 (2020-02-18), XP086147302, ISSN: 0143-8166, [retrieved on 20200218], DOI: 10.1016/ J.OPTLASENG.2020.106061**
• **FRANCISCO BALZAROTTI ET AL: "Nanometer resolution imaging and tracking of fluorescent molecules with minimal photon fluxes", SCIENCE, vol. 355, no. 6325, 10 February 2017 (2017-02-10), US, pages 606 - 612, XP055426923, ISSN: 0036-8075, DOI: 10.1126/science.aak9913**

**Beschreibung**

## TECHNISCHES GEBIET DER ERFINDUNG

Die Erfindung bezieht sich auf ein Verfahren und eine Vorrichtung zum Bestimmen von Positionen von voneinander beabstandeten Molekülen in einer oder mehreren Raumrichtungen in einer Probe, insbesondere nach einem MINFLUX-Verfahren.

## STAND DER TECHNIK

Auf dem MINFLUX-Verfahren basierende Lokalisations- und Tracking-Methoden für einzelne Moleküle gemäß dem Stand der Technik sind z.B. in den Patentanmeldungen DE 10 2011 055 367 A1, WO 2015/052186 A1, der Patentschrift DE 10 2013 114 860 und der Veröffentlichung Balzarotti F, Eilers Y, Gwosch KC, Gynnå, A, Westphal V, Stefani F, Elf J, Hell SW "Nanometer resolution imaging and tracking of fluorescent molecules with minimal photon fluxes", arXiv:1611.03401 [physics.optics] (2016) beschrieben.

Im Wesentlichen wird dabei eine Probe mit Fluorophoren mit einer Anregungslichtintensitätsverteilung abgetastet, die ein lokales Intensitätsminimum im Zentrum aufweist, das von Intensitätsmaxima umgeben ist. Solche Intensitätsverteilungen sind z. B. aus der STED (Stimulated Emission Depletion) - Mikroskopie bekannt.

Bei der MINFLUX-Mikroskopie hingegen wird die Probe schrittweise mit dem Minimum der Anregungsverteilung abgetastet. Zunächst wird mit einer unabhängigen Methode ein einzelner Fluorophor aufgefunden und in einem Vorlokalisationsschritt wird die Position des Fluorophors grob geschätzt. Dann wird das zentrale Minimum der Anregungslichtverteilung nacheinander an mehreren Positionen in der Nähe der geschätzten Position positioniert, und es wird für jede Position ein Emissionssignal gemessen, vorzugsweise durch Zählung einzelner Fluoreszenzphotonen mit einem konfokalen Punktdetektor. Die gemessene Fluoreszenzintensität bzw. die gezählte Photonenanzahl pro Zeiteinheit hängt für jede Position der Anregungslichtverteilung vom Abstand zwischen dem Minimum der Anregungslichtverteilung und dem tatsächlichen Ort des Fluorophors ab: Je näher am Minimum sich der Fluorophor befindet, desto geringer ist das Fluoreszenzsignal. Auf diese Weise lässt sich, insbesondere iterativ, die Position eines einzelnen Fluorophors mit extrem hoher Genauigkeit (bis zu 1 nm) bestimmen. Hierzu werden nach dem Stand der Technik z. B. modifizierte Maximum-Likelihood-Schätzer verwendet.

Ein weiterer Vorteil der MINFLUX-Mikroskopie neben der sehr hohen Genauigkeit liegt in der hohen Photoneneffizienz: Für die Lokalisation eines Fluorophors werden im Durchschnitt eine deutlich geringere Anzahl von Anregungsphotonen benötigt als z.B. bei der Einzelmoleküllokalisierung mittels PALM/STORM-Mikroskopie, was Bleichen und Phototoxizität (im Falle von lebenden Proben) vermindert. Dies resultiert daraus, dass sich üblicherweise mit jeder Iteration das Minimum der Anregungslichtverteilung immer weiter an die tatsächliche Fluorophorposition annähert - mit jedem Schritt wird der Fluorophor mit weniger Photonen beaufschlagt.

Die STED-Mikroskopie beruht auf der Depletion von Fluoreszenz durch stimulierte Emission: Durch Einstrahlung von STED-Licht geeigneter Wellenlänge können Fluorophore aus dem angeregten Zustand gezielt in den Grundzustand (zurück-)versetzt werden, in dem die Fluorophore nicht mehr fluoreszieren.

Bei der STED-Mikroskopie wird üblicherweise eine näherungsweise gaußförmige Anregungslichtverteilung mit einer, z. B. donutförmigen, STED-Lichtverteilung mit einem lokalen Minimum überlagert, wobei das Maximum der Anregungslichtverteilung mit dem Minimum der STED-Lichtverteilung zur Deckung gebracht wird. Dadurch werden außerhalb des Zentrums befindliche Fluorophore von dem STED-Licht gezielt abgeregt und tragen somit nicht zum Fluoreszenzsignal bei. Auf diese Weise kann die effektive Auflösung bis weit unter die Beugungsgrenze gesenkt werden.

Der Artikel "Stimulated emission depletion microscopy with array detection and photon reassignment" von Wang Wensheng et. al. (Optics and Lasers in Engineering, Elsevier, Amsterdam, NL, Bd. 129, 18.02.2020, doi: 10.1016/J.OPTLASENG.2020.106061) beschreibt ein STED-Mikroskopieverfahren, bei dem von Emittern in der Probe ausgehendes Fluoreszenzlicht mit einem Array von Avalanche-Fotodioden (APDs) ortsaufgelöst in einer Detektionsebene erfasst wird, wobei die Signale der APDs durch Pixel Reassignment kombiniert werden, um die Signalstärke und somit das Signal-Rauschverhältnis bei gleichbleibender Ortsauflösung zu verbessern.

In einigen Schriften des Standes der Technik wurde bereits eine Kombination von MINFLUX-Verfahren und ähnlichen Einzelmolekül-Lokalisationsmethoden mit der STED-Mikroskopie vorgeschlagen.

So beschreiben die Patentanmeldungen DE 10 2017 104 736 A1 und EP 3 372 989 A1 eine Überlagerung einer Anregungslichtverteilung mit lokalem Maximum mit einer STED-Lichtverteilung mit lokalem Minimum. Die Probe wird durch Verlagerung der STED-Verteilung mit dem STED-Minimum abgetastet und aus den gemessenen Werten der Fluoreszenzintensität bei verschiedenen Positionen der STED-Intensitätsverteilung wird durch einen Fitalgorithmus die Position des Fluorophors bestimmt. Durch das STED-Licht kann zusätzliches durch in der Nähe des zu lokalisierenden Fluorophors befindliche weitere Fluorophore verursachtes Fluoreszenzlicht unterdrückt werden. Allerdings ist die beschriebene Methode insbesondere im Vergleich zum herkömmlichen MINFLUX-Verfahren deutlich weniger photoneneffizient, da die aus den überlagerten Lichtverteilungen resultierende effektive Emissions- (Detektions)-Punktspreizfunktion (engl. Point Spread Function, PSF) im Zentrum ein Maximum statt eines Minimums (wie bei der MINFLUX-Mikroskopie) aufweist.

Aus der WO 2020/198750 A1 ist außerdem ein Verfahren bekannt, bei dem eine Probe mit einem ersten und einem zweiten Fluorophor markiert wird, wobei sich die Anregungs- und Emissionswellenlängen der beiden Fluorophore unterscheiden. In einer $4\pi$-Mikroskopanordnung (also einer Anordnung, bei der die Lichtstrahlen durch zwei in axialer Richtung auf gegenüberliegenden Seiten der Probe positionierte Objektive auf die Probe fokussiert werden, wobei diese Lichtstrahlen zumindest teilweise miteinander interferieren) wird die Position des ersten Fluorophors z. B. durch MINFLUX-Nanoskopie in kurzen Abständen ermittelt und die Position der Probe relativ zum Strahlengang des Mikroskops wird anhand der ermittelten Position so nachgestellt, dass sich der erste Fluorophor während des Experiments stets im Zentrum des Sichtfeldes befindet. Zur Lokalisierung bzw. Abbildung des zweiten Fluorophors relativ zum ersten Fluorophor wird dann der zweite Fluorophor mit einer gaußförmigen Anregungslichtverteilung im Bereich der Anregungswellenlänge des zweiten Fluorophors beaufschlagt, die mit einer Donut-förmigen STED-Lichtverteilung überlagert wird, welche sich ausschließlich auf die Fluoreszenz des zweiten Fluorophors auswirkt. Mit dieser Methode können z.B. in biologischen Zellen mit dem zweiten Fluorophor markierte RNA-Polymerase-Komplexe relativ zu spezifischen mit dem ersten Fluorophor markierten Genloci lokalisiert und verfolgt werden.

Weiterhin offenbaren die Patentschrift EP 3 055 674 B1 und die Patentanmeldung US 2014/0042340 A1 eine MINFLUX-basierte Einzelmolekül-Tracking-Methode, bei der eine Anregungslichtverteilung mit lokalem Minimum und eine STED-Verteilung mit lokalem Minimum konzentrisch überlagert werden. Die Breite und Form des Minimums der STED-Verteilung entspricht dabei bis auf eine geringe wellenlängenabhängige Abweichung im Wesentlichen der Breite und Form der Anregungsverteilung. Durch das zusätzliche STED-Licht werden die Fluorophore nur in einem schmalen Bereich um das Zentrum durch das Anregungslicht angeregt. Dadurch ist es nicht notwendig, ein Fluorophor im Bereich des gesamten Sichtfelds zu vereinzeln, sondern die Vereinzelung muss nur für den engeren Bereich des STED-Minimums erreicht werden, um die Bewegung eines Fluorophors zu verfolgen.

Eine analoge Kombination der MINFLUX- und STED-Techniken offenbart auch die chinesische Patentanmeldung CN 111024658 A, gemäß der eine Probe gemeinsam mit konzentrisch angeordneten Anregungs- und STED-Lichtverteilungen abgerastert wird, um einzelne Fluorophore in der Probe zu lokalisieren.

Mithilfe der beschriebenen Verfahren lässt sich durch zusätzliches STED-Licht unter anderem störende Hintergrundfluoreszenz bei der MINFLUX-Lokalisierung einzelner Fluorophore reduzieren.

Jedoch weisen diese den Nachteil auf, dass die effektive PSF des Fluoreszenzemissionslichts (Detektionslichts) sowohl durch die Anregungslichtverteilung als auch durch die STED-Lichtverteilung beeinflusst wird. Dadurch ergibt sich insbesondere ein reduzierter Gradient der effektiven Anregung und eine reduzierte Detektionseffizienz. Weiterhin erfordern die Methoden eine relativ gute Kenntnis der Position des zu lokalisierenden Moleküls.

## AUFGABE DER ERFINDUNG

Der Erfindung liegt daher die Aufgabe zugrunde, ein Verfahren und eine Vorrichtung zum Bestimmen von Positionen von voneinander beabstandeten Molekülen in einer oder mehreren Raumrichtungen in einer Probe zur Verfügung zu stellen, die in hinsichtlich der oben erläuterten Nachteile des Standes der Technik verbesserter Weise die Hintergrundfluoreszenz bei der MINFLUX-Lokalisierung reduziert.

## LÖSUNG

Die Aufgabe der Erfindung wird durch ein Verfahren mit den Merkmalen des unabhängigen Patentanspruchs 1 und eine Vorrichtung mit den Merkmalen des Anspruchs 13 gelöst. Die abhängigen Ansprüche 2 bis 12 betreffen vorteilhafte Ausführungsformen des Verfahrens und die abhängigen Ansprüche 14 und 15 vorteilhafte Ausführungsformen der Vorrichtung.

## BESCHREIBUNG DER ERFINDUNG

Das Verfahren nach einem ersten Aspekt der Erfindung dient zum Bestimmen von Positionen von voneinander beabstandeten Molekülen in einer oder mehreren Raumrichtungen in einer Probe.

Die voneinander beabstandeten Moleküle sind insbesondere dazu ausgebildet, bei einer Beleuchtung der Probe mit Anregungslicht einer ersten Wellenlänge Emissionslicht einer zweiten Wellenlänge zu emittieren, wobei das Emissionslicht z. B. Fluoreszenzlicht sein kann.

Die lichtemittierenden Moleküle sind voneinander beabstandet, das heißt vereinzelt. Mit anderen Worten: Die Moleküle weisen einen solchen mittleren Abstand zueinander auf, dass diese mit dem erfindungsgemäßen Verfahren getrennt voneinander lokalisiert werden können. Da es sich bei der erfindungsgemäßen Methode insbesondere um ein nicht beugungsbegrenztes Lokalisationsverfahren handelt, kann der mittlere Abstand dabei insbesondere unterhalb der Wellenlänge des Anregungslichts und/oder des Deaktivierungslichts liegen. In manchen Anwendungen kann es jedoch trotzdem vorteilhaft sein, wenn der mittlere Abstand mindestens der Wellenlänge des Anregungslichts und/oder des Deaktivierungslichts entspricht. In diesem Fall ist es insbesondere möglich, die einzelnen Moleküle mit beugungsbegrenzten Methoden wie PALM/STORM-Mikroskopie mit Kamera-Bildgebung mit geringerer Auflösung vorzulokalisieren.

Die Vereinzelung der Moleküle kann im Fall von Fluorophoren (im Kontext dieser Anmeldung auch als 'Fluoreszenzfarbstoff' bezeichnet), z.B. dadurch erreicht werden, dass Moleküle der Probe mit einer definierten Menge an Fluorophoren markiert werden, so dass sich eine gewünschte Markierungsdichte der Probe ergibt. Alternativ dazu ist es aber z.B. auch möglich, die Probe mit einer höheren Dichte von Fluorophoren zu markieren, wenn nicht alle Fluorophore gleichzeitig Licht emittieren. Hierzu kann z.B. das Blinkverhalten der Fluorophore ausgenutzt werden, d.h. die Eigenschaft, mit einer bestimmten Wahrscheinlichkeit spontan von einem aktiven Zustand, in dem bei Einstrahlung von Anregungslicht Fluoreszenzlicht emittiert wird, in einen inaktiven Zustand, in dem bei Einstrahlung von Anregungslicht kein Fluoreszenzlicht emittiert wird, zu wechseln. Selbstverständlich kann auch eine Teilmenge der Fluorophore gezielt in den aktiven oder inaktiven Zustand überführt werden, z.B. durch Einstrahlung von Aktivierungslicht (auch als Schaltlicht bezeichnet) oder Deaktiverungslicht geeigneter Wellenlänge (insbesondere bei Verwendung sogenannter schaltbarer Fluorophore), um die aktiven Fluorophore zu vereinzeln.

Das Bestimmen von Positionen der Moleküle wird hier auch als Lokalisation oder Lokalisierung bezeichnet und umfasst insbesondere die Positionsbestimmung mit einer Genauigkeit im Bereich von 1 nm bis 100 nm, weiter insbesondere 1 nm bis 10 nm.

Die Positionsbestimmung kann in einer Raumrichtung, in zwei Raumrichtungen oder in drei Raumrichtungen erfolgen. Insbesondere verlaufen die zwei Raumrichtungen dabei senkrecht zu einer optischen Achse, entlang derer das Anregungslicht und insbesondere auch das Deaktivierungslicht auf die Probe eingestrahlt wird, d.h. die beiden Richtungen bilden eine Ebene (x-y-Ebene) senkrecht zur optischen Achse, insbesondere eine Fokusebene in der Probe. Im Fall einer Positionsbestimmung in drei Raumrichtungen verläuft die dritte Raumrichtung insbesondere parallel zur optischen Achse (also in z-Richtung). Selbstverständlich sind jedoch auch andere Raumrichtungen möglich, z.B. zur optischen Achse schief angeordnete Ebenen.

Das Verfahren weist die folgenden Schritte auf:

- Erzeugen einer Mehrzahl an Lichtverteilungen, wobei jede Lichtverteilung ein lokales Intensitätsminimum und daran angrenzend Intensitätsanstiegsbereiche aufweist, wobei die Lichtverteilungen eine Anregungslichtverteilung und eine Deaktivierungs-Lichtverteilung umfassen,

- Beleuchten der Probe mit der Anregungslichtverteilung und der Deaktivierungs-Lichtverteilung,

- Erfassen von durch das Molekül emittierten Photonen für verschiedene Positionierungen der Anregungslichtverteilung und

- Ableiten der Position des Moleküls auf Basis der für die verschiedenen Positionierungen der Anregungslichtverteilung erfassten Photonen.

Die Lichtverteilungen (d.h. räumliche Intensitätsverteilungen des Lichts) weisen jeweils ein lokales Intensitätsminimum, d.h. einen Punkt oder mehrere aneinander angrenzende Punkte im Raum, auf, an denen eine minimale Lichtintensität herrscht. Die minimale Lichtintensität kann dabei Null oder nahezu Null betragen, d.h. nicht größer als eine Hintergrund-Lichtintensität sein. Die lokalen Intensitätsminima der Anregungslichtverteilung und der Deaktivierungs-Lichtverteilung liegen insbesondere in einer Fokusebene in der Probe. Insbesondere sind die Anregungslichtverteilung und/oder die Deaktivierungs-Lichtverteilung symmetrisch ausgebildet, wobei das jeweilige lokale Intensitätsminimum in einem Zentrum der jeweiligen Lichtverteilung liegt. Selbstverständlich kann die Anregungslichtverteilung und/oder die Deaktivierungs-Lichtverteilung auch jeweils mehrere lokale Minima aufweisen, z.B. bei periodischen Lichtverteilungen wie z.B. Linienmustern oder zweidimensionalen oder dreidimensionalen Gittern.

Die Lichtverteilungen werden insbesondere erzeugt, indem für jede Lichtverteilung ein Lichtstrahl kohärenten Lichts (d.h. ein Anregungslichtstrahl und ein Deaktivierungslichtstrahl), z.B. von einer Laserquelle, erzeugt wird, und wobei die Lichtstrahlen jeweils amplituden- oder phasenmoduliert und in die Probe fokussiert werden, insbesondere mit einem Objektiv. Aufgrund der Amplituden- oder Phasenmodulation ergeben sich dann im Fokus die oben beschriebenen Lichtverteilungen mit den lokalen Minima. Die Lichtstrahlen können dabei getrennt voneinander oder gemeinsam amplituden- oder phasenmoduliert werden. Beispielsweise kann jeweils durch Phasenmodulation ein sogenannter 2D-Donut oder 3D-Donut erzeugt werden.

Unter dem Begriff 'Anregungslicht' ist im Zusammenhang der vorliegenden Spezifikation Licht zu verstehen, welches eine geeignete Wellenlänge aufweist, um die voneinander beabstandeten Moleküle, insbesondere die Fluorophore, in der Probe, anzuregen, so dass diese Photonen, insbesondere Fluoreszenz, emittieren.

Mit 'Deaktivierungs-Licht' ist im Zusammenhang der vorliegenden Spezifikation Licht gemeint, das verhindert, dass die voneinander beabstandeten Moleküle bei Einstrahlung des Anregungslichts Photonen emittieren. Hierzu kann das Deaktivierungs-Licht z.B. die Moleküle von einem angeregten Zustand in einen Grundzustand oder einen Schwingungszustand über dem Grundzustand überführen, z.B. durch stimulierte Emission. Alternativ dazu ist es auch möglich, dass das Deaktivierungs-Licht die Moleküle in einen inaktiven Zustand, z.B. einen Dunkelzustand versetzt, in welchem diese keine Photonen emittieren können. Weiterhin könnte das Deaktivierungs-Licht gemäß der vorliegenden Erfindung auch den Wechsel der Moleküle von einem inaktiven Zustand in einen aktiven Zustand verhindern. Das Deaktivierungslicht kann im Zusammenhang der vorliegenden Spezifikation auch als Fluoreszenzverhinderungslicht bezeichnet werden und ist insbesondere Stimulationslicht bzw. STED-Licht.

Die Anregungslichtverteilung und die Deaktivierungs-Lichtverteilung beleuchten gemäß dem erfindungsgemäßen Verfahren die Probe, d.h. die Anregungslichtverteilung beleuchtet zumindest einen Teil der Probe, in dem sich das zu lokalisierende Molekül befindet.

Die emittierten Photonen werden insbesondere mit einem Punktdetektor wie einer Avalanche-Photodiode (engl. *single photon avalanche diode,* SPAD), einer Photomultiplier-Röhre (PMT) oder einem Hybriddetektor oder einem Flächendetektor, der mehrere in einer Bildebene angeordnete Punktdetektoren, z.B. der oben genannten Arten, aufweist, erfasst. Dabei kann z.B. eine Zählrate, d.h. eine Anzahl von detektierten Photonen pro Zeiteinheit, ermittelt werden, die analog zu einer Emissionsintensität für ein einzelnes Molekül behandelt werden kann.

Zur Umpositionierung der Anregungslichtverteilung kann z.B. der Anregungslichtstrahl relativ zur Probe verschoben werden, beispielsweise mit einer oder mehreren elektrooptischen Ablenkungseinheit/en (engl. *electro optical deflector,* EOD), akustooptischen Ablenkeinheiten (engl. *acousto optical deflector,* AOD), galvanometrischen Scannern, Mikrospiegel-Arrays oder Lichtmodulatoren (engl. *spatial light modulators,* SLM). Alternativ zu einer Strahlablenkung kann selbstverständlich auch ein Probenhalter, an dem die Probe befestigt ist, relativ zu dem Anregungslichtstrahl umpositioniert werden, etwa mit piezoelektrischen Elementen.

Die emittierten Photonen werden für jede Positionierung der Anregungslichtverteilung erfasst und die Position des Moleküls wird aus den Positionierungen der Anregungslichtverteilung und den jeweils zugeordneten Emissionslichtintensitäten bzw. Photonenzählraten bestimmt. Dies kann z.B. gemäß einem MINFLUX-Verfahren erfolgen. Dabei wird ausgenutzt, dass desto weniger Photonen von dem Molekül emittiert werden, je näher sich dieses am lokalen Minimum der Anregungslichtverteilung befindet. Die Positionsschätzung des Moleküls kann z.B. mittels eines, ggf. modifizierten, Maximum-Likelihood-Schätzers erfolgen, insbesondere wie aus dem Stand der Technik bekannt.

Das erfindungsgemäße Verfahren zeichnet sich dadurch aus, dass das lokale Minimum der Anregungslichtverteilung nacheinander an einer Mehrzahl von Abtastpositionen innerhalb eines Abtastbereiches angeordnet wird, wobei die Lichtintensität des Deaktivierungslichts in einem dem Abtastbereich zugeordneten Fangbereich, in dem die Position des Moleküls aus den Abtastpositionen und den zugeordneten erfassten Photonen eindeutig ableitbar ist, maximal der Sättigungsintensität entspricht. Insbesondere entspricht die Lichtintensität des Deaktivierungslichts auch in dem Abtastbereich maximal der Sättigungsintensität.

Dabei bezeichnet der Begriff ,Sättigungsintensität' diejenige Lichtintensität des Deaktivierungslichts, bei der 50 % der Moleküle, insbesondere Fluorophore, deaktiviert werden (z.B. im Fall von STED-Licht durch stimulierte Emission).

Wenn sich das Molekül in dem Fangbereich befindet, kann das Molekül durch Auswertung der Photonenzahlen für die jeweiligen Abtastpositionen eindeutig lokalisiert werden. Außerhalb des Fangbereichs können sich dagegen insbesondere mehrere geschätzte Positionen des Moleküls aus den ermittelten Photonenzahlen ergeben. Das heißt z.B., dass ein auf Basis der Photonenzahlen und Abtastpositionen ermittelter Maximum-Likelihood-Schätzer eindeutige Werte liefert, sofern sich das Molekül tatsächlich in dem Fangbereich befindet. Der Fangbereich ist insbesondere kleiner als der Abtastbereich, kann jedoch, je nach dem verwendeten Muster (engl. *set of targeted coordinates,* STC) der Abtastpositionen und insbesondere dem verwendeten Positionsschätzer auch gleich groß oder größer als der Abtastbereich sein. Weiterhin kann der Fangbereich eine Fläche (z.B. in der Fokusebene bei einer 2D-Lokalisierung) oder ein Volumen (bei einer 3D-Lokalisierung) bilden.

Eine maximale Intensität des Deaktivierungslichts in dem Fangbereich, welche maximal der Sättigungsintensität entspricht, kann z.B. durch eine breitere Deaktivierungs-Lichtverteilung (z.B. durch eine Anpassung der Intensität oder der Phasenmodulation) im Vergleich zur Anregungslichtverteilung erreicht werden. Dabei kann die Anregungslichtverteilung z.B. innerhalb eines breiteren Bereichs um das Minimum einer stationären Deaktivierungs-Lichtverteilung umpositioniert werden, oder die Deaktivierungs-Lichtverteilung kann gemeinsam mit der Anregungslichtverteilung umpositioniert werden.

Durch das erfindungsgemäße Verfahren kann insbesondere erreicht werden, dass eine effektive Detektions-Punktspreizfunktion (PSF), insbesondere eine Breite der effektiven Detektions-Punktspreizfunktion (z.B. definiert als volle Breite an der Position des halben Maximums, engl. *full width at half maximum,* FWHM) weitgehend unbeeinflusst von der Deaktivierungs-Lichtverteilung ist, und zwar unabhängig davon, wo innerhalb des Fangbereichs sich das Molekül tatsächlich befindet.

Dabei ist mit dem Begriff ,effektive Detektions-PSF' die Verteilung des von dem Molekül nach der Anregung mit dem Anregungslicht emittierten Emissionslichts gemeint, die sich durch Beugung durch das optische System ergibt. Die Detektions-PSF ergibt sich hier grundsätzlich aus einer Kombination der Anregungs-PSF und der PSF des Deaktivierungslichts. Diese ist jedoch bei dem erfindungsgemäßen Verfahren gegebenenfalls dadurch verzerrt, dass die Anregungs-PSF und die Deaktivierungs-PSF nicht konzentrisch zueinander angeordnet sind und somit eine Abweichung von der Position des Zentrums einer Projektion der Detektionslochblende, also eine nicht-konfokale Anordnung, besteht.

Bei der STED-Mikroskopie (hierbei entspricht das STED-Licht dem Deaktivierungslicht) gemäß dem Stand der Technik wird die effektive Detektions-PSF durch das STED-Licht gezielt verschmälert, um die Auflösung bis unter die Beugungsgrenze zu erhöhen.

Im Gegensatz dazu sind die Lichtverteilungen gemäß der vorliegenden Erfindung so ausgebildet, dass die effektive Detektions-PSF im Wesentlichen nur durch die Anregungslichtverteilung beeinflusst wird. Die Detektions-PSF soll also bei der erfindungsgemäßen Methode insbesondere nicht schmaler werden. Vielmehr soll durch das Deaktivierungslicht Hintergrundemission von weiteren im Bereich der Anregungslichtverteilung oder in deren Nachbarschaft befindlichen Fluorophoren unterdrückt werden, um das Signal-zu-Hintergrund-Verhältnis zu erhöhen. Die Tatsache, dass die Deaktivierungs-Lichtverteilung sich nur gering auf die effektive PSF der Photonenemission auswirkt, hat dabei den Vorteil, dass die Unterdrückung der Hintergrundfluoreszenz bei gleichzeitig einfacherer und genauerer Positionsbestimmung des Moleküls möglich ist.

Gemäß einer Ausführungsform entspricht die Lichtintensität des Deaktivierungslichts an den Abtastpositionen maximal 50 % der Sättigungsintensität, insbesondere maximal 45 % der Sättigungsintensität, weiter insbesondere maximal 40 % der Sättigungsintensität, weiter insbesondere maximal 35 % der Sättigungsintensität, weiter insbesondere maximal 30 % der Sättigungsintensität, weiter insbesondere maximal 25 % der Sättigungsintensität, weiter insbesondere maximal 20 % der Sättigungsintensität, weiter insbesondere maximal 15 % der Sättigungsintensität, weiter insbesondere maximal 10 % der Sättigungsintensität, weiter insbesondere maximal 5 % der Sättigungsintensität.

Gemäß einer Ausführungsform ist das Deaktivierungslicht STED-Licht, also Licht, das die Moleküle, insbesondere Fluorophore, durch stimulierte Emission in einen Schwingungszustand über dem Grundzustand versetzt, von welchem diese ohne Emission eines Photons in den Grundzustand übergehen.

Gemäß einer weiteren Ausführungsform wird die Anregungslichtverteilung umpositioniert, während die Deaktivierungs-Lichtverteilung ortsfest belassen wird, sodass das lokale Minimum der Anregungslichtverteilung mehrfach unterschiedlich innerhalb einer Umgebung des lokalen Intensitätsminimums bzw. einem Bereich um das lokale Intensitätsminimum der Deaktivierungs-Lichtverteilung positioniert wird. Der Bereich um das lokale Intensitätsminimum, in welchem die Anregungslichtverteilung umpositioniert wird, weist dabei insbesondere eine solche Breite auf, dass die effektive Detektions-PSF der Photonenemission in dem Bereich nicht oder nur minimal durch das Deaktivierungslicht beeinflusst wird.

Dadurch, dass die Deaktivierungslichtverteilung stationär bleibt, lässt sich ein weniger komplexer und insbesondere kompakterer optischer Aufbau erreichen, da keine Mittel zur simultanen schnellen Strahlverlagerung des Anregungslichtstrahls und des Deaktivierungs-Lichtstrahls notwendig sind. Beispielsweise kann das Anregungslicht mittels akusto-optischer Deflektoren (AOD) verlagert werden, während der Deaktivierungs-Lichtstrahl insbesondere nur langsamer, z.B. durch einen galvanometrischen Scanner, verlagert wird.

Gemäß einer weiteren Ausführungsform werden für das Bestimmen der Positionen Lichtverteilungen verwendet, die aufgrund von Interferenz kohärenten Lichts entstehen. Dies ist beispielsweise bei einer Phasenmodulation von Laserlicht in einer zur Objektivpupille konjugierten Ebene zur Erzeugung der Lichtverteilungen im Fokus der Fall.

Gemäß einer weiteren Ausführungsform wird die Mehrzahl von Lichtverteilungen unter Verwendung mindestens einer Strahlformungseinrichtung, insbesondere mindestens eines Lichtmodulators, weiter insbesondere mit einer Vielzahl von schaltbaren Pixeln, erzeugt. Der mindestens eine Lichtmodulator kann z.B. ein phasenmodulierender sogenannter *spatial light modulator* (SLM) sein. Diese Modulatoren weisen insbesondere eine aktive Oberfläche mit einem Blaze-Gitter auf, wobei die schaltbaren Pixel auf der aktiven Oberfläche angeordnet sind, und wobei durch einen Schaltvorgang mittels Flüssigkristallen die einzelnen Pixel auf einen gewünschten Phasenwert eingestellt werden können. Durch Erzeugung von Phasenmustern wie Vortexmustern oder konzentrischen Ringen und Kreisscheiben mittels der schaltbaren Pixel lassen sich z. B. Intensitätsverteilungen wie 2D-Donuts und 3D-Donuts in der Fokusebene erzeugen. Insbesondere ist der mindestens eine Lichtmodulator in einer zu einer Objektivpupille konjugierten Ebene angeordnet. Als Alternative zu einem Lichtmodulator kann z.B. auch eine Phasenplatte vorgesehen sein, der das Phasenmuster aufgeprägt ist.

Gemäß einer weiteren Ausführungsform ist ein Bereich zwischen zwei an das lokale Intensitätsminimum der Deaktivierungs-Lichtverteilung angrenzenden lokalen Maxima der Deaktivierungs-Lichtverteilung zumindest in einer Raumrichtung weiter ausgedehnt, insbesondere um 10 % oder mehr weiter ausgedehnt, weiter insbesondere um 20 % oder mehr weiter ausgedehnt, weiter insbesondere um 30 % oder mehr weiter ausgedehnt, weiter insbesondere um 40 % oder mehr weiter ausgedehnt, weiter insbesondere um 50 % oder mehr weiter ausgedehnt, weiter insbesondere um 60 % oder mehr weiter ausgedehnt, weiter insbesondere um 70 % oder mehr weiter ausgedehnt, weiter insbesondere um 80 % oder mehr weiter ausgedehnt, weiter insbesondere um 90 % oder mehr weiter ausgedehnt, weiter insbesondere um 100 % oder mehr weiter ausgedehnt, weiter insbesondere um 150 % oder mehr weiter ausgedehnt, weiter insbesondere um 200 % oder mehr weiter ausgedehnt, weiter insbesondere um 300 % oder mehr weiter ausgedehnt, weiter insbesondere um 400 % oder mehr weiter ausgedehnt, weiter insbesondere um 500 % oder mehr weiter ausgedehnt, als ein entsprechender Bereich zwischen zwei an das lokale Minimum der Anregungslichtverteilung angrenzenden lokalen Maxima der Anregungslichtverteilung. Die Breite der Deaktivierungs-Lichtverteilung kann z.B. durch Änderung der Gesamtintensität des Deaktivierungslichts und/oder durch Änderung des Phasenmusters erfolgen, welches dem Deaktivierungslichtstrahl aufgeprägt wird. Durch die breitere Deaktivierungslichtverteilung im Vergleich zur Anregungslichtverteilung kann vorteilhafterweise erreicht werden, dass die effektive Detektions-PSF während des Umpositionierens der Anregungslichtverteilung nur minimal durch die Deaktivierungslichtverteilung beeinflusst wird.

Gemäß einer weiteren Ausführungsform beträgt eine Lichtintensität des Deaktivierungslichts innerhalb des Abtastbereiches, in dem die Anregungslichtverteilung, insbesondere das lokale Minimum der Anregungslichtverteilung, umpositioniert wird, 10 % oder weniger, insbesondere 5 % oder weniger, weiter insbesondere 4 % oder weniger, weiter insbesondere 3 % oder weniger, weiter insbesondere 2 % oder weniger, weiter insbesondere 1 % oder weniger, weiter insbesondere 0,5 % oder weniger, weiter insbesondere 0,4 % oder weniger, weiter insbesondere 0,3 % oder weniger, weiter insbesondere 0,2 % oder weniger, weiter insbesondere 0,1 % oder weniger, einer maximalen Lichtintensität des Deaktivierungslichts. Mit der maximalen Lichtintensität des Deaktivierungslichts ist dabei der Intensitätswert an einem örtlichen Intensitätsmaximum gemeint, das insbesondere an der Position eines an das lokale Minimum angrenzenden lokalen Maximums herrscht. Auf diese Weise lässt sich eine Hintergrundunterdrückung bei einer nur minimalen Auswirkung der Deaktivierungslichtverteilung auf die effektive Detektions-PSF erreichen.

Gemäß einer weiteren Ausführungsform wird eine Mehrzahl an Abtastschritten durchgeführt, wobei das lokale Minimum der Anregungslichtverteilung in jedem der Abtastschritte an einer Mehrzahl der Abtastpositionen eines jeweiligen Abtastbereiches positioniert wird, wobei der jeweilige Abtastbereich jedes Abtastschrittes eine geringere Fläche oder ein geringeres Volumen aufweist als die Abtastbereiche der vorhergehenden Abtastschritte, und die Deaktivierungslichtverteilung in zumindest einem Teil der Abtastschritte, insbesondere in Abhängigkeit der Fläche oder des Volumens des jeweiligen Abtastbereiches, angepasst wird. Dabei hat insbesondere auch der dem jeweiligen Abtastbereich zugeordnete Fangbereich des jeweiligen Abtastschritts eine geringe Fläche bzw. ein geringeres Volumen als der Fangbereich des vorhergehenden Abtastschritts. Insbesondere können bei dem Verfahren weitere Abtastschritte durchgeführt werden, in denen die Fläche oder das Volumen des Abtastbereiches (und insbesondere auch die Fläche oder das Volumen des Fangbereichs) konstant bleibt, insbesondere gegen Ende einer Lokalisierung eines Moleküls.

Gemäß einer weiteren Ausführungsform wird eine Gesamtintensität der Deaktivierungslichtverteilung in Abhängigkeit der Fläche oder des Volumens des jeweiligen Abtastbereiches angepasst, wobei insbesondere die Gesamtintensität umso größer ist, je geringer die Fläche oder das Volumen des jeweiligen Abtastbereiches ist.

Gemäß einer weiteren Ausführungsform wird eine Form der Deaktivierungslichtverteilung in Abhängigkeit der Fläche oder des Volumens des jeweiligen Abtastbereiches angepasst, wobei insbesondere eine Halbwertsbreite der Deaktivierungslichtverteilung umso geringer ist, je geringer die Fläche oder das Volumen des jeweiligen Abtastbereiches ist. Dazu kann z.B. das zur Phasenmodulation des Deaktivierungs-Lichtstrahls verwendete Phasenmuster zwischen den Abtastschritten modifiziert werden, beispielsweise durch Ansteuern der Pixel eines Lichtmodulators.

Gemäß einer weiteren Ausführungsform ist der Abtastbereich ein Kreis oder eine Kugel mit einem Radius um eine geschätzte Position des Moleküls, wobei der Radius in einem initialen Abtastschritt, in dem die Anregungslichtverteilung mehrfach innerhalb des Abtastbereichs umpositioniert wird, einen ersten Wert aufweist, und wobei insbesondere die Anregungslichtverteilung anschließend an den initialen Abtastschritt in mindestens einem weiteren Abtastschritt innerhalb des Abtastbereichs umpositioniert wird, wobei der Radius in dem mindestens einen weiteren Abtastschritt einen zweiten Wert aufweist, der kleiner als der erste Wert ist. Dies entspricht beispielsweise den Iterationen eines MINFLUX-Verfahrens. Insbesondere wird das Minimum der Anregungslichtverteilung in jedem der Abtastschritte nacheinander an einer Mehrzahl an Positionen eines innerhalb des jeweiligen Abtastbereichs angeordneten Koordinatenmusters (auch als *set of targeted coordinates,* STC, oder *targeted coordinate pattern,* TCP, bezeichnet) um eine geschätzte Position des Fluorophors angeordnet. Weiter insbesondere wird nach jedem Abtastschritt eine geschätzte Position des Fluorophors aus den emittierten Photonen und den zugehörigen Positionen des Minimums der Anregungslichtverteilung bestimmt, wobei in jedem Abtastschritt die im vorherigen Abtastschritt geschätzte Position des Moleküls den Mittelpunkt des Abtastbereichs definiert.

Gemäß einer weiteren Ausführungsform bleibt die Deaktivierungs-Lichtverteilung während des Umpositionierens der Anregungslichtverteilung konstant. D.h., es bleiben insbesondere die Gesamtlichtintensität und die Form der Deaktivierungs-Lichtverteilung konstant. Insbesondere bleiben die Gesamtintensität und die Form der Deaktivierungs-Lichtverteilung über eine Mehrzahl an Abtastschritten hinweg, insbesondere über alle Abtastschritte hinweg, konstant. Alternativ dazu kann die Deaktivierungs-Lichtverteilung während des Umpositionierens der Anregungslichtverteilung (oder zwischen Positionsänderungen der Anregungslichtverteilung) verändert werden, d.h. es kann sich insbesondere die Form und/oder die Gesamtintensität der Deaktivierungs-Lichtverteilung verändern.

Gemäß einer weiteren Ausführungsform wird nach dem Ableiten der Position des Moleküls die Position mindestens eines weiteren Moleküls in der Probe bestimmt, indem das weitere Molekül mit der Anregungslichtverteilung beleuchtet wird, durch das weitere Molekül emittierte Photonen für verschiedene Positionierungen der Anregungslichtverteilung erfasst werden und die Position des weiteren Moleküls auf Basis der für die verschiedenen Positionierungen der Anregungslichtverteilung erfassten Photonen abgeleitet wird, wobei vor dem Bestimmen der Position des weiteren Moleküls das lokale Minimum der Anregungslichtverteilung und das lokale Minimum der Deaktivierungs-Lichtverteilung, insbesondere gleichzeitig, an einer erwarteten Position des weiteren Moleküls positioniert werden. Dabei können die Anregungslichtverteilung und die Deaktivierungs-Lichtverteilung z.B. gemeinsam mit einer Scanvorrichtung, z.B. einem galvanometrischen Scanner verlagert werden, wobei insbesondere eine erwartete Position des weiteren Moleküls in der Fokusebene im Zentrum eines Bildes einer Detektions-Lochblende angeordnet wird (d.h. es wird bezüglich der erwarteten Position des Moleküls eine konfokale Anordnung realisiert).

Gemäß einer weiteren Ausführungsform wird eine Vorlokalisierung des Moleküls durchgeführt, wobei eine initiale geschätzte Position des Moleküls ermittelt wird, und wobei die Probe während der Vorlokalisierung insbesondere lediglich mit der Anregungslichtverteilung (also nicht mit der Deaktivierungs-Lichtverteilung) beleuchtet wird. Insbesondere umfasst die Vorlokalisierung ein Auffinden des Moleküls, d.h. das Identifizieren eines Lichtemitters in einem bestimmten Probenvolumen durch Erfassen von Photonen über einer Hintergrundemission. Insbesondere wird die Lokalisierung auf Basis der initialen geschätzten Position durchgeführt, wobei weiter insbesondere ein Mittelpunkt des initialen Abtastbereiches an der initialen geschätzten Position angeordnet wird. Die Vorlokalisierung muss nicht auf dem MINFLUX-Verfahren basieren, sondern kann z.B. auch auf einer unabhängigen Positionierungsmethode geringerer Genauigkeit basieren. Z.B. kann die Vorlokalisierung mittels Weitfeldfluoreszenzmikroskopie mit Kamerabildgebung erfolgen. Eine weitere Möglichkeit ist das konfokale Scannen eines Probenbereichs mit einem näherungsweise gaußförmigen Fokus des Anregungslichts und das Detektieren des Emissionslichts mit einem Punktdetektor. Gemäß einer weiteren Ausführungsform wird bei der Vorlokalisierung die Probe mit einer Anregungslichtverteilung mit einem lokalen Minimum (insbesondere derselben Anregungslichtverteilung wie bei der MINFLUX-Lokalisation) beleuchtet, wobei Emissionslicht positionsabhängig detektiert wird und auf Basis der positionsabhängigen Detektion die initiale Position des Moleküls ermittelt wird. Die positionsabhängige Detektion kann insbesondere durch Verschieben einer Projektion einer Detektionslochblende in die Probenebene bei gleichbleibender Position der Anregungslichtverteilung erfolgen (sogenannter ,Pinhole-Orbit-Scan'). Dabei kann z.B. die Projektion der Detektionslochblende mit einer ersten Scanvorrichtung, z.B. einem galvanometrischen Scanner, verschoben werden, wobei mit einer zweiten Scanvorrichtung, z.B. einem oder mehreren EODs, die Position des Anregungslichtstrahls so korrigiert wird, dass die Position der Anregungslichtverteilung konstant bleibt. Alternativ dazu kann z.B. auch mit einem Flächendetektor (z.B. einem Array von Avalanche-Photodioden) eine Verteilung des Emissionslichts in einer Detektorebene bestimmt werden, um die initiale Position des Moleküls zu ermitteln.

Gemäß einer weiteren Ausführungsform wird die Probe bei der Vorlokalisation mit der Deaktivierungs-Lichtverteilung beleuchtet (z. B. während eines Pinhole-Orbit-Scans oder einer positionsabhängigen Detektion mit einem Array-Detektor). Dadurch kann vorteilhafterweise Hintergrundfluoreszenz, insbesondere aus entlang der optischen Achse oberhalb oder unterhalb des Fokus des Anregungslichts gelegenen Ebenen, reduziert werden, wodurch die Genauigkeit der Vorlokalisation erhöht wird. Insbesondere wird eine Form der Deaktivierungs-Lichtverteilung und/oder eine Intensität des Deaktivierungslichts zwischen der Vorlokalisation und den weiteren Lokalisationsschritten (z.B. MINFLUX-Schritten) angepasst. In manchen Fällen kann es allerdings auch vorteilhaft sein, die Probe während der Vorlokalisation lediglich mit dem Anregungslicht zu beleuchten und die Probe erst während der weiteren Lokalisationsschritte mit dem Deaktivierungslicht zu beleuchten.

Gemäß einer weiteren Ausführungsform wird die Anregungslichtverteilung mit einem elektrooptischen Deflektor relativ zu der Probe verlagert, wobei die Deaktivierungs-Lichtverteilung mit einem galvanometrischen Scanner relativ zu der Probe verlagert wird. Gemäß einer weiteren Ausführungsform werden sowohl die Anregungslichtverteilung als auch die Deaktivierungs-Lichtverteilung mit einem elektrooptischen Deflektor relativ zu der Probe verlagert, insbesondere gemeinsam.

Gemäß einer weiteren Ausführungsform wird die Anregungslichtverteilung durch Einstrahlung eines Anregungslichtstrahls auf die Probe entlang einer optischen Achse gebildet und/oder die Deaktivierungslichtverteilung wird durch Einstrahlung eines Deaktivierungs-Lichtstrahls auf die Probe entlang einer optischen Achse, insbesondere entlang derselben optischen Achse, gebildet.

Gemäß einer weiteren Ausführungsform wird die Deaktivierungs-Lichtverteilung als 2D-Donut ausgebildet. Hierbei wird unter einem 2D-Donut insbesondere eine Lichtverteilung verstanden, die ein (einziges) zentrales Intensitätsminimum, insbesondere eine Nullstelle der Intensität, aufweist, wobei das Intensitätsminimum in einer Ebene senkrecht zu der optischen Achse an das Intensitätsminimum angrenzende lokale Intensitätsmaxima aufweist. Insbesondere kann ein 2D-Donut in einer zur Objektivpupille konjugierten Ebene durch eine Phasenmodulation mit einem Vortexmuster (von 0 bis $2n \cdot \pi$ in Umfangsrichtung bezüglich der optischen Achse, wobei n eine natürliche Zahl ist), z.B. mittels einer Phasenplatte oder eines SLM erzeugt werden. Dabei wird der phasenmodulierte Lichtstrahl insbesondere zirkular polarisiert.

Gemäß einer weiteren Ausführungsform wird der 2D-Donut durch Phasenmodulation des Deaktivierungslichts mit einem ersten Phasenmuster erzeugt, wobei das erste Phasenmuster eine in einer Umfangsrichtung bezüglich der optischen Achse, insbesondere kontinuierlich, von 0 auf $2n \cdot \pi$ ansteigende Phase aufweist, wobei n eine natürliche Zahl ist, welche größer als 1 ist, wobei insbesondere $n \geq 5$. Das heißt, es wird ein Vortexmuster erzeugt, welches von Phasenwerten von 0 bis zu Phasenwerten größer als $2\pi$, nämlich z.B. $4\pi$, $6\pi$, $8\pi$ oder $10\pi$ läuft. Dadurch kann vorteilhafterweise in der Fokusebene ein breiterer Bereich geringer Lichtintensität um das lokale Minimum erzeugt werden, was es erleichtert, die Abtastpositionen in einem Bereich der Deaktivierungsverteilung anzuordnen, in dem maximal die Sättigungsintensität herrscht. Die Anregungslichtverteilung kann dabei z.B. durch Phasenmodulation des Anregungslichts mit einem Phasenmuster erzeugt werden, das eine in der Umfangsrichtung, insbesondere kontinuierlich, von 0 bis $2\pi$ ansteigende Phase aufweist. Ein Vortexmuster mit einer von 0 bis $10\pi$ oder mehr ansteigenden Phase hat sich dabei als besonders vorteilhaft herausgestellt, da durch dieses Phasenmuster eine Deaktivierungs-Lichtverteilung mit einem besonders breiten Bereich geringer Intensität gebildet wird.

Gemäß einer weiteren Ausführungsform wird die Deaktivierungs-Lichtverteilung als 3D-Donut ausgebildet. Ein 3D-Donut (auch als *bottle beam* bezeichnet), weist ein (einziges) zentrales Intensitätsminimum, insbesondere eine Nullstelle der Intensität, auf, das von lokalen Intensitätsmaxima in allen drei Raumrichtungen umgeben ist. Somit bildet der 3D-Donut insbesondere ein allseitig von Intensitätsanstiegen umgebenes Minimum aus. Der 3D-Donut kann z.B. durch Modulation mit einem ersten Phasenmuster erzeugt werden, das konzentrische Ringe (bzw. Ringe und Kreisscheiben) konstanter Phase aufweist, die zueinander eine Phasendifferenz von $\pi$ aufweisen. Eine 3D-donutförmige Deaktivierungs-Lichtverteilung ist für das erfindungsgemäße Verfahren besonders vorteilhaft, da er in der Fokusebene (in x-y-Richtung) einen relativ breiten Bereich geringer Lichtintensität aufweist, so dass die effektive Emissions-PSF wenig von dem Deaktivierungslicht beeinflusst wird. Insbesondere weist das erste Phasenmuster eine Kreisscheibe sowie einen ersten Ring, der konzentrisch um die Kreisscheibe angeordnet ist, einen zweiten Ring, der konzentrisch um den ersten Ring angeordnet ist, und einen dritten Ring, der konzentrisch um den zweiten Ring angeordnet ist, auf, wobei die Kreisscheibe und der erste Ring, der erste Ring und der zweite Ring sowie der zweite Ring und der dritte Ring zueinander einen Phasenunterschied von $\pi$ aufweisen. Dies ergibt vorteilhafterweise eine in z-Richtung gestreckte Intensitätsverteilung.

Gemäß einer weiteren Ausführungsform wird der Deaktivierungs-Lichtstrahl mittels eines Objektivs in die Probe fokussiert, wobei ein Strahlquerschnitt des Deaktivierungs-Lichtstrahls so angepasst, insbesondere verkleinert, wird, dass eine Pupille des Objektivs unterleuchtet wird, so dass die Deaktivierungs-Lichtverteilung in Richtung der optischen Achse, also in axialer Richtung, gestreckt wird. Die Ebene der Pupille ist dabei eine Fourierebene der Fokusebene in der Probe. Die axiale Streckung der Deaktivierungs-Lichtverteilung hat den Vorteil, dass der Bereich, in dem das Deaktivierungslicht die Hintergrundemission (insbesondere Hintergrundfluoreszenz) durch weitere Moleküle in der Umgebung des zu lokalisierenden Moleküls unterdrückt, in axialer Richtung erweitert wird. Die Störung des Signals durch die Hintergrundfluoreszenz ist in der axialen Richtung besonders ausgeprägt, so dass sich die Qualität der Lokalisation durch diese Ausführungsform deutlich verbessern lässt. Selbst wenn die Gesamtintensität des Deaktivierungslichts bei der Streckung der Deaktivierungslicht-Verteilung konstant bleibt, wodurch die Lichtintensität an bestimmten Punkten vermindert wird, kann diese geringere Intensität immer noch ausreichen, um die Hintergrundemission effektiv zu unterdrücken, so dass sich die Ausweitung des axialen Bereichs trotz dieses Effekts positiv auswirkt.

Die Anpassung des Strahlquerschnitts des Deaktivierungs-Lichtstrahls kann z.B. durch eine, insbesondere einstellbare, Aperturblende erreicht werden, welche das Objektiv gezielt unterleuchtet. Alternativ dazu kann z.B. eine Blende im Strahlengang vor der Strahlformungseinrichtung (insbesondere dem Lichtmodulator, z.B. dem SLM) angeordnet werden, um den Deaktivierungslichtstrahl vor dem Auftreffen auf die Strahlformungseinrichtung zu verengen. Eine weitere Möglichkeit, bei der kein Licht an einer Blende verloren geht, besteht in einer Verengung des Strahlquerschnitts mit einer Zoom-Optik.

Gemäß einer weiteren Ausführungsform wird der Strahlquerschnitt des Deaktivierungs-Lichtstrahls durch Anpassung einer aktiven Oberfläche einer Strahlformungseinrichtung, insbesondere eines Lichtmodulators (z.B. SLM) angepasst. Die aktive Oberfläche der Strahlformungseinrichtung ist dazu ausgebildet, einem Lichtstrahl, der die aktive Oberfläche durchtritt oder an der aktiven Oberfläche reflektiert und/oder gebeugt wird, ein, insbesondere einstellbares, Phasenmuster aufzuprägen. Die aktive Oberfläche weist insbesondere ein Blaze-Gitter zur Beugung des Deaktivierungs-Lichtstrahls und eine Mehrzahl an, insbesondere flüssigkristallbasierten, Pixeln auf, wobei ein Phasenwert der Pixel einstellbar ist, so dass ein einstellbares Phasenmuster mit dem Blaze-Gitter überlagert wird, um dem gebeugten Lichtstrahl eine Phasenverteilung aufzuprägen.

Gemäß einer weiteren Ausführungsform wird eine Orientierung des Blaze-Gitters in einem äußeren Bereich der aktiven Oberfläche der Strahlformungseinrichtung angepasst, um den Strahlquerschnitt des Deaktivierungslichtstrahls anzupassen, wobei insbesondere eine Beugungsordnung des Blaze-Gitters angepasst wird. Die Anpassung des Blaze-Gitters führt insbesondere dazu, dass auf den äußeren Bereich auftreffendes Licht aus einem Strahlengang ausgekoppelt wird, so dass dieses nicht die Probe beleuchtet. Der äußere Bereich der aktiven Oberfläche umschließt insbesondere einen inneren Bereich der aktiven Oberfläche, auf dem insbesondere das erste Phasenmuster dargestellt wird, um die Deaktivierungs-Lichtverteilung zu erzeugen. Somit verringert sich der Strahlquerschnitt des Deaktivierungslichtstrahls auf das Licht, welches vom inneren Bereich der aktiven Oberfläche in den Strahlengang gelangt.

Gemäß einer weiteren Ausführungsform wird, insbesondere zusätzlich zu dem ersten Phasenmuster, ein zweites Phasenmuster auf der aktiven Oberfläche der Strahlformungseinrichtung erzeugt. Dabei wird die Deaktivierungs-Lichtverteilung durch eine Phasenmodulation des Deaktivierungs-Lichtstrahls mit dem zweiten Phasenmuster gestreckt.

Gemäß einer weiteren Ausführungsform ist das zweite Phasenmuster als in einer Umfangsrichtung zu der optischen Achse erstreckter Ring ausgebildet, insbesondere wobei der Ring eine Mehrzahl an Segmenten aufweist, wobei aneinander angrenzende Segmente jeweils einen Phasenunterschied von $\pi$ zueinander aufweisen. Ein solches Phasenmuster führt zu einer Streckung einer Lichtintensitätsverteilung im Fokus, die durch ein innerhalb des Rings angeordnetes erstes Phasenmuster in einer zur Objektivpupille konjugierten Ebene erzeugt wird. Insbesondere ist das zweite Phasenmuster konzentrisch um das erste Phasenmuster herum angeordnet, weiter insbesondere auf dem äußeren Bereich der aktiven Oberfläche, wobei das erste Phasenmuster auf dem inneren Bereich der aktiven Oberfläche gebildet wird. Z.B. kann es sich bei dem ersten Phasenmuster um einen weiteren Ring handeln, der konzentrisch um eine Kreisscheibe herum angeordnet ist, wobei der weitere Ring und die Kreisscheibe einen Phasenunterschied von $\pi$ aufweisen. Auf diese Weise kann z.B. bei Einhaltung geeigneter Flächenverhältnisse ein gestreckter 3D-Donut erzeugt werden. Dieser ist für das erfindungsgemäße Verfahren besonders gut geeignet, da er in der Fokusebene (in x-y-Richtung) einen relativ breiten Bereich geringer Lichtintensität aufweist, so dass die effektive Detektions-PSF wenig von dem Deaktivierungslicht beeinflusst wird, jedoch in axialer Richtung (z-Richtung) einen erweiterten Bereich abdeckt, um effektiv Hintergrundfluoreszenz zu unterdrücken. Die Anregungslichtverteilung kann dabei z.B. als 3D-Donut (*bottle beam*) ohne zusätzliche axiale Streckung ausgebildet sein.

Gemäß einer weiteren Ausführungsform weisen sowohl das erste Phasenmuster als auch das zweite Phasenmuster in Umfangsrichtung graduell von 0 auf $n \cdot 2\pi$ ansteigende Phasenwerte (Vortexmuster) auf, wobei das erste Phasenmuster auf einer Kreisscheibe angeordnet ist und das zweite Phasenmuster auf einem konzentrisch um das erste Phasenmuster herum angeordneten Ring angeordnet ist, und wobei das erste Phasenmuster und das zweite Phasenmuster in einer radialen Richtung einen Phasenunterschied von $a \cdot \pi$ aufweisen. Ein solches Phasenmuster ist in der Patentanmeldung WO 2019/221622 A1 beschrieben. Durch Anpassung des Verhältnisses zwischen den Außenradien der Kreisscheibe (erstes Phasenmuster) und des Rings (zweites Phasenmuster) lassen sich die Streckung der resultierenden Lichtverteilung in Richtung der optischen Achse und die Breite der Verteilung flexibel anpassen.

Gemäß einer weiteren Ausführungsform weist das erste Phasenmuster eine Kreisscheibe und einen konzentrisch um die Kreisscheibe angeordneten ersten Ring auf, wobei das zweite Phasenmuster einen konzentrisch um den ersten Ring angeordneten zweiten Ring und einen konzentrisch um den zweiten Ring angeordneten dritten Ring aufweist, und wobei die Kreisscheibe und der erste Ring, der erste Ring und der zweite Ring sowie der zweite Ring und der dritte Ring jeweils einen Phasenunterschied von $\pi$ zueinander aufweisen. Auf diese Weise lässt sich ebenfalls bei geeigneten Flächenverhältnissen ein in z-Richtung gestreckter 3D-Donut generieren.

Gemäß einer weiteren Ausführungsform wird, insbesondere zu dem ersten und/oder dem zweiten Phasenmuster, auf der aktiven Oberfläche der Strahlformungseinrichtung ein weiteres, drittes Phasenmuster erzeugt, wobei das dritte Phasenmuster insbesondere zumindest teilweise mit dem ersten Phasenmuster überlagert wird. Das dritte Phasenmuster bildet insbesondere eine Kreisscheibe mit einer Mehrzahl an Segmenten, wobei jeweils aneinander angrenzende Segmente einen Phasenunterschied von $\pi$ zueinander aufweisen. Hierdurch lässt sich vorteilhafterweise in der Fokusebene zusätzliches Licht (z.B. Nebenmaxima) in einem peripheren Bereich um die fokale Intensitätsverteilung herum erzeugen, wodurch die Unterdrückung der Hintergrundemission verbessert werden kann. Das dritte Phasenmuster überlappt insbesondere in einem zentralen Teilbereich mit dem ersten Phasenmuster oder ist radial innerhalb des ersten Phasenmusters angeordnet.

Gemäß einer weiteren Ausführungsform weist das erste Phasenmuster die Form einer Kreisscheibe mit einer in Umfangsrichtung vortexförmig von 0 auf $2n \cdot \pi$ ansteigenden Phase auf, wobei das dritte Phasenmuster aus einer sich im Zentrum der Kreisscheibe über einen Teilbereich der Kreisscheibe erstreckenden Mehrzahl an Kreisscheibensegmenten gebildet ist, wobei dem ersten Phasenmuster in den Segmenten durch das zweite Phasenmuster ein zusätzlicher Phasensprung von $+\frac{\pi}{2}$ bzw. $-\frac{\pi}{2}$ überlagert ist. Auf diese Weise kann in Kombination mit einem zirkular polarisierenden Element ein (ggf. verbreiterter) 2D-Donut mit zusätzlichen Nebenmaxima erzeugt werden.

Gemäß einer weiteren Ausführungsform weist das dritte Phasenmuster die Form einer Kreisscheibe mit einer Mehrzahl an Segmenten auf, wobei aneinander angrenzende Segmente einen Phasenunterschied von $\pi$ zueinander aufweisen, wobei das erste Phasenmuster ein konzentrisch um das dritte Phasenmuster herum angeordneten ersten Ring und einen konzentrisch um den ersten Ring angeordneten zweiten Ring aufweist, und wobei der erste Ring und der zweite Ring zueinander einen Phasenunterschied von $\pi$ aufweisen. Bei Einhaltung geeigneter Flächenverhältnisse des ersten und zweiten Rings und insbesondere der Segmente kann auf diese Weise in der Fokusebene ein 3D-Donut mit zusätzlichen Nebenmaxima erzeugt werden.

Gemäß einer weiteren Ausführungsform wird der Deaktivierungs-Lichtstrahl zumindest näherungsweise als Bessel-Strahl ausgebildet. Ein solcher Lichtstrahl kann z.B. durch Fokussierung des Deaktivierungslichts mit einem Axikon oder durch Phasenmodulation des Deaktivierungslichts mit einem, insbesondere ringförmigen, Phasenmuster erzeugt werden. Die Erzeugung eines hohlen Bessel-artigen STED-Strahls ist aus dem Stand der Technik bekannt (siehe z.B. P. Zhang, P. Goodwin, J. Werner: 'Fast, super resolution imaging via Bessel beam stimulated emission depletion microscopy', Opt. Expr. 22, 12398 (2014);W. Yu, Z. Ji, D. Dong, X. Yang, Y. Xiao, X. Gong, P. Xi und K. Shi: 'Super-resolution deep imaging with hollow Bessel beam STED microscopy', Laser & Photonics Review, 10 (1), 146-152, January 2016).

Ein zweiter Aspekt der Erfindung betrifft eine Vorrichtung, insbesondere ein Mikroskop, zum Bestimmen von Positionen von voneinander beabstandeten Molekülen in einer oder mehreren Raumrichtungen in einer Probe, insbesondere nach einem Verfahren gemäß dem ersten Aspekt. Die Vorrichtung weist mindestens eine Lichtquelle zum Erzeugen eines Anregungslichtsrahls und eines Deaktivierungslichtstrahls, insbesondere eines STED-Lichtstrahls, und mindestens eine Strahlformungseinrichtung zum Bilden einer Anregungs-Lichtverteilung aus dem Anregungslichtstrahl und einer Deaktivierungs-Lichtverteilung aus dem Deaktivierungslichtstrahl auf, wobei die Anregungslichtverteilung und die Deaktivierungs-Lichtverteilung jeweils ein lokales Intensitätsminimum und daran angrenzend Intensitätsanstiegsbereiche aufweisen. Weiterhin weist die Vorrichtung eine optische Anordnung zum Beleuchten der Probe mit der Anregungslichtverteilung und der Deaktivierungs-Lichtverteilung, mindestens einen Detektor zum Erfassen von durch das Molekül emittierten Photonen für verschiedene Positionierungen der Anregungslichtverteilung und eine Recheneinheit zum Ableiten der Position des Moleküls auf Basis der für die verschiedenen Positionierungen der Anregungslichtverteilung erfassten Photonen auf.

Die Vorrichtung weist insbesondere mindestens eine Strahlablenkeinrichtung auf, die dazu ausgebildet ist, das lokale Minimum der Anregungslichtverteilung nacheinander an einer Mehrzahl von Abtastpositionen innerhalb eines Abtastbereiches anzuordnen, wobei die Vorrichtung weiterhin eine Steuereinheit aufweist, die dazu ausgebildet ist, die Lichtintensität des Deaktivierungslichts in einem dem Abtastbereich zugeordneten Fangbereich, in dem die Position des Moleküls aus den Abtastpositionen und den zugeordneten erfassten Photonen eindeutig ableitbar ist, maximal auf die Sättigungsintensität, insbesondere maximal auf 50 % der Sättigungsintensität, weiter insbesondere maximal auf 45 % der Sättigungsintensität, weiter insbesondere maximal auf 40 % der Sättigungsintensität, weiter insbesondere maximal auf 35 % der Sättigungsintensität, weiter insbesondere maximal auf 30 % der Sättigungsintensität, weiter insbesondere auf maximal 25 % der Sättigungsintensität, weiter insbesondere auf maximal 20 % der Sättigungsintensität, weiter insbesondere auf maximal 15 % der Sättigungsintensität, weiter insbesondere auf maximal 10 % der Sättigungsintensität, weiter insbesondere auf maximal 5 % der Sättigungsintensität, des Deaktivierungslichts einzustellen. Dazu steuert die Steuereinheit insbesondere die Lichtquelle, welche das Deaktivierungslicht erzeugt, oder eine separate Vorrichtung zur Einstellung der Intensität des Deaktivierungslichts.

Die Vorrichtung ist insbesondere dazu ausgebildet, die Anregungslichtverteilung und die Deaktivierungs-Lichtverteilung während der verschiedenen Positionierungen der Anregungslichtverteilung so zu bilden, dass eine effektive Detektions-PSF, insbesondere eine Breite der effektiven Detektions-PSF, unbeeinflusst von der Deaktivierungs-Lichtverteilung ist.

Gemäß einer Ausführungsform ist die mindestens eine Strahlablenkeinrichtung dazu ausgebildet, die Anregungslichtverteilung relativ zu der Deaktivierungs-Lichtverteilung umzupositionieren, insbesondere wobei die mindestens eine Strahlablenkeinrichtung dazu ausgebildet ist, das lokale Minimum der Anregungslichtverteilung mehrfach unterschiedlich innerhalb einer Umgebung des lokalen Intensitätsminimums der Deaktivierungs-Lichtverteilung zu positionieren. Insbesondere weist die mindestens eine Strahlablenkeinrichtung eine Scanvorrichtung, insbesondere einen galvanometrischen Scanner, auf, die dazu ausgebildet ist, die Anregungslichtverteilung und die Deaktivierungs-Lichtverteilung gemeinsam relativ zu der Probe umzupositionieren, wobei die mindestens eine Strahlablenkeinrichtung weiterhin eine laterale Strahlablenkeinrichtung, insbesondere umfassend mindestens eine elektrooptische oder akustooptische Ablenkeinheit, aufweist, die dazu ausgebildet ist, die Anregungslichtverteilung relativ zu der Deaktivierungs-Lichtverteilung umzupositionieren.

Gemäß einer weiteren Ausführungsform ist die mindestens eine Strahlablenkeinrichtung dazu ausgebildet, die Anregungslichtverteilung umzupositionieren, während die Deaktivierungs-Lichtverteilung ortsfest belassen wird, sodass das lokale Minimum der Anregungslichtverteilung mehrfach unterschiedlich innerhalb einer Umgebung des lokalen Intensitätsminimums der Deaktivierungs-Lichtverteilung positioniert wird.

Gemäß einer weiteren Ausführungsform ist die mindestens eine Strahlablenkeinrichtung dazu ausgebildet, die Anregungslichtverteilung und die Deaktivierungs-Lichtverteilung gemeinsam umzupositionieren.

Gemäß einer weiteren Ausführungsform ist die mindestens eine Strahlformungseinrichtung dazu ausgebildet, einen Bereich zwischen zwei an das lokale Intensitätsminimum der Deaktivierungs-Lichtverteilung angrenzenden lokalen Maxima der Deaktivierungs-Lichtverteilung zumindest in einer Raumrichtung weiter, insbesondere mindestens 10 % weiter, weiter insbesondere mindestens 20 % weiter, ausgedehnt auszubilden als einen entsprechenden Bereich zwischen zwei an das lokale Minimum der Anregungslichtverteilung angrenzenden lokalen Maxima der Anregungslichtverteilung.

Gemäß einer weiteren Ausführungsform ist die Vorrichtung dazu ausgebildet, eine Mehrzahl an Abtastschritten durchzuführen, wobei die mindestens eine Strahlablenkeinrichtung dazu ausgebildet ist, das lokale Minimum der Anregungslichtverteilung in jedem der Abtastschritte an einer Mehrzahl der Abtastpositionen eines jeweiligen Abtastbereiches zu positionieren, wobei der jeweilige Abtastbereich jedes Abtastschritts eine geringere Fläche oder ein geringeres Volumen aufweist als die Abtastbereiche der vorhergehenden Abtastschritte, und wobei die mindestens eine Strahlformungseinrichtung bzw. die Steuereinheit dazu ausgebildet ist, die Deaktivierungslichtverteilung in zumindest einem Teil der Abtastschritte in Abhängigkeit der Fläche oder des Volumens des jeweiligen Abtastbereiches anzupassen, wobei die mindestens eine Strahlformungseinrichtung dazu ausgebildet ist, eine Gesamtintensität und/oder eine Form der Deaktivierungslichtverteilung in Abhängigkeit der Fläche oder des Volumens des jeweiligen Abtastbereiches anzupassen.

Gemäß einer weiteren Ausführungsform ist die mindestens eine Strahlformungseinrichtung bzw. die Steuereinheit dazu ausgebildet, die Deaktivierungs-Lichtverteilung während des Umpositionierens der Anregungslichtverteilung konstant zu halten.

Gemäß einer weiteren Ausführungsform ist die Vorrichtung dazu ausgebildet, nach dem Ableiten der Position des Moleküls die Position mindestens eines weiteren Moleküls in der Probe zu bestimmen, wobei die Anregungs-Lichtquelle und die mindestens eine Strahlformungseinrichtung dazu ausgebildet sind, das weitere Molekül mit der Anregungslichtverteilung zu beleuchten, und wobei der Detektor dazu ausgebildet ist, durch das weitere Molekül emittierte Photonen für verschiedene Positionierungen der Anregungslichtverteilung zu erfassen, und wobei die Recheneinheit dazu ausgebildet ist, die Position des weiteren Moleküls auf Basis der für die verschiedenen Positionierungen der Anregungslichtverteilung erfassten Photonen abzuleiten, wobei die mindestens eine Strahlablenkeinrichtung dazu ausgebildet ist, vor dem Bestimmen der Position des weiteren Moleküls das lokale Minimum der Anregungslichtverteilung und das lokale Minimum der Deaktivierungs-Lichtverteilung an einer erwarteten Position des weiteren Moleküls zu positionieren.

Gemäß einer weiteren Ausführungsform weist die Vorrichtung eine erste Strahlformungseinrichtung, insbesondere einen ersten Lichtmodulator oder eine erste Phasenplatte, zum Erzeugen der Anregungslichtverteilung und eine zweite Strahlformungseinrichtung, insbesondere einen zweiten Lichtmodulator oder eine zweite Phasenplatte, zum von der Erzeugung der Anregungslichtverteilung unabhängigen Erzeugen der Deaktivierungs-Lichtverteilung auf. Alternativ dazu können die Lichtverteilungen z. B. auch durch zwei räumlich voneinander getrennte Bereiche eines einzigen Lichtmodulators erzeugt werden.

Gemäß einer weiteren Ausführungsform weist die Strahlformungseinrichtung eine aktive Oberfläche zur Erzeugung eines Phasenmusters auf, wobei die Strahlformungseinrichtung insbesondere als Lichtmodulator oder Phasenplatte ausgebildet ist.

Gemäß einer weiteren Ausführungsform ist die mindestens eine Strahlformungseinrichtung dazu ausgebildet, die Deaktivierungs-Lichtverteilung als 2D-Donut auszubilden.

Gemäß einer weiteren Ausführungsform ist die mindestens eine Strahlformungseinrichtung dazu ausgebildet, auf seiner aktiven Oberfläche das erste Phasenmuster, das zweite Phasenmuster und/oder das dritte Phasenmuster zu erzeugen.

Gemäß einer weiteren Ausführungsform weist das erste Phasenmuster eine in einer Umfangsrichtung bezüglich der optischen Achse, insbesondere kontinuierlich, von 0 auf $2n \cdot \pi$ ansteigende Phase auf, insbesondere wobei $n$ eine natürliche Zahl ist, welche größer als 1 ist. Dabei weist die Vorrichtung insbesondere ein zirkular polarisierendes Element, insbesondere eine $\lambda/4$-Platte, in einem Strahlengang zwischen der Strahlformungseinrichtung und dem Objektiv auf.

Gemäß einer weiteren Ausführungsform weist die Vorrichtung eine Steuereinheit auf, wobei die Steuereinheit dazu ausgebildet ist, die Strahlformungseinrichtung so anzusteuern, dass das erste Phasenmuster modifiziert wird, insbesondere so, dass eine Form der Deaktivierungslichtverteilung in Abhängigkeit der Fläche oder des Volumens des jeweiligen Abtastbereiches, insbesondere in den Abtastschritten, angepasst wird.

Gemäß einer weiteren Ausführungsform ist die mindestens eine Strahlformungseinrichtung dazu ausgebildet, die Deaktivierungs-Lichtverteilung als 3D-Donut auszubilden.

Gemäß einer weiteren Ausführungsform ist die mindestens eine Strahlformungseinrichtung dazu ausgebildet, auf seiner aktiven Oberfläche ein erstes Phasenmuster zu erzeugen, das konzentrische Ringe konstanter Phase aufweist, die zueinander eine Phasendifferenz von π aufweisen.

Gemäß einer weiteren Ausführungsform weist die Vorrichtung ein Objektiv zum Fokussieren des Deaktivierungslichtstrahls (und insbesondere auch des Anregungslichtstrahls in die Probe auf, wobei die Vorrichtung weiterhin eine einstellbare Aperturblende in einem Strahlengang zwischen der Deaktivierungs-Lichtquelle und der Strahlformungseinrichtung oder eine Zoomoptik zur Verkleinerung des Strahlquerschnitts des Deaktivierungs-Lichtstrahls aufweist, wobei die Vorrichtung eine Steuereinheit aufweist, die dazu ausgebildet ist, die Aperturblende oder die Zoomoptik so zu steuern, dass ein Strahlquerschnitt des Deaktivierungs-Lichtstrahls derart angepasst wird, dass eine Pupille des Objektivs unterleuchtet wird, so dass die Deaktivierungs-Lichtverteilung in Richtung der optischen Achse (d.h. in axialer Richtung) gestreckt wird.

Gemäß einer weiteren Ausführungsform weist die Vorrichtung eine optische Einheit auf, die dazu ausgebildet ist, den Deaktivierungs-Lichtstrahl zumindest näherungsweise als Bessel-Strahl auszubilden. Insbesondere weist die optische Einheit ein Axikon oder einen SLM zur Bildung bzw. Strahlformung des Deaktivierungs-Lichtstrahls als Bessel-Strahl auf.

Gemäß einer weiteren Ausführungsform ist die Steuereinheit dazu ausgebildet, die aktive Oberfläche der Strahlformungseinrichtung, insbesondere des Lichtmodulators, so anzupassen, dass der Strahlquerschnitt des Deaktivierungs-Lichtstrahls durch Anpassung der aktiven Oberfläche angepasst, insbesondere verkleinert, wird.

Gemäß einer weiteren Ausführungsform ist die Steuereinheit dazu ausgebildet, eine Orientierung eines Blaze-Gitters in einem äußeren Bereich der aktiven Oberfläche der Strahlformungseinrichtung anzupassen, so dass der Strahlquerschnitt des Deaktivierungs-Lichtstrahls angepasst, insbesondere verkleinert, wird.

Vorteilhafte Weiterbildungen der Erfindung ergeben sich aus den Patentansprüchen, der Beschreibung und den Zeichnungen. Dabei sind die Ansprüche nicht dahingehend zu verstehen, dass nur solche Gegenstände, Vorrichtungen oder Verfahren, die jeweils nur alle oder keines der Merkmale eines Unteranspruchs zusätzlich zu den Merkmalen der unabhängigen Ansprüche 1 und 13 aufweisen, mögliche Weiterbildungen der Erfindung sein können. Vielmehr können sich weitere Weiterbildungen aus in der Beschreibung genannten sowie aus den Zeichnungen entnehmbaren Merkmalen, die einzeln oder kumulativ zur Wirkung kommen können, ergeben.

## KURZBESCHREIBUNG DER FIGUREN

Im Folgenden wird die Erfindung anhand in den Figuren dargestellter bevorzugter Ausführungsbeispiele weiter erläutert und beschrieben.

Fig. 1      zeigt schematisch den Ablauf des erfindungsgemäßen Verfahrens;

Fig. 2      zeigt schematisch mehrere Schritte eines MINFLUX-Lokalisierungsverfahrens;

Fig. 3      zeigt eine Vorrichtung zum Bestimmen von Positionen eines Moleküls gemäß einer ersten Ausführungsform der vorliegenden Erfindung;

Fig. 4      zeigt eine Vorrichtung zum Bestimmen von Positionen eines Moleküls gemäß einer zweiten Ausführungsform der vorliegenden Erfindung;

Fig. 5      zeigt eine Strahlformungseinrichtung als Teil einer erfindungsgemäßen Vorrichtung nach einer Ausführungsform der Erfindung;

Fig. 6A-D      zeigen verschiedene Phasenmuster zur Erzeugung von Deaktivierungs-Lichtverteilungen und entsprechende durch Simulationen erzeugte Höhenlinien-Diagramme;

Fig. 7A-D      zeigt weitere Phasenmuster zur Erzeugung von Deaktivierungs-Lichtverteilungen und entsprechende simulierte Höhenlinien-Diagramme;

Fig. 8A-D      zeigen Plots einer Anregungslichtverteilung und verschiedener Deaktivierungs-Lichtverteilungen entlang einer Richtung in der Fokusebene;

Fig. 9A-D      zeigen ein weiteres Phasenmuster zur Erzeugung einer Deaktivierungs-Lichtverteilung sowie verschiedene Plots der durch das Phasenmuster erzeugten Deaktivierungs-Lichtverteilung und einer Anregungslichtverteilung;

Fig. 10A-E      zeigen ein weiteres Phasenmuster zur Erzeugung einer Deaktivierungs-Lichtverteilung sowie verschiedene Plots der durch das Phasenmuster erzeugten Deaktivierungs-Lichtverteilung im Vergleich zu einer Bottle-Beam-Verteilung.

## FIGURENBESCHREIBUNG

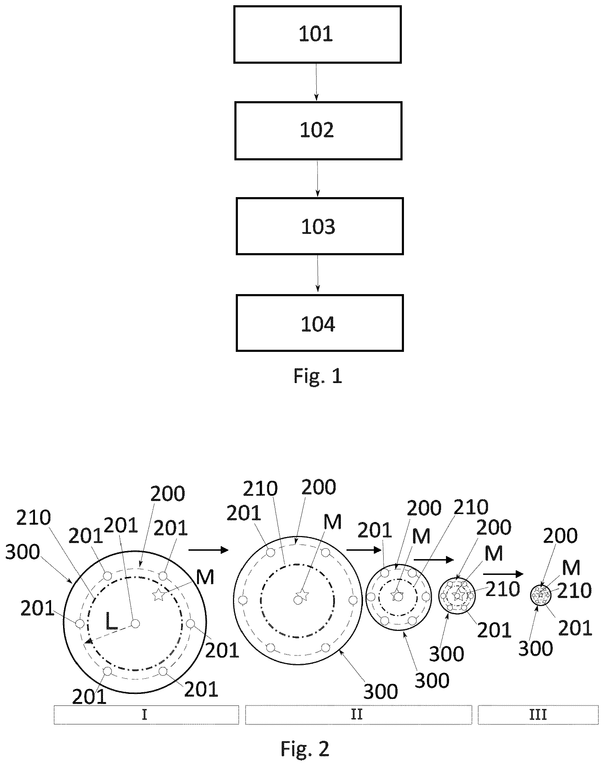

**Fig. 1** illustriert den Ablauf des erfindungsgemäßen Verfahrens als Blockdiagramm. Das Verfahren ist insbesondere eine MINFLUX-Lokalisierung mit zusätzlichem Deaktivierungs- (z.B. STED-) Licht.

In dem Schritt 101 werden eine Anregungslichtverteilung 100 und eine Deaktivierungs-Lichtverteilung

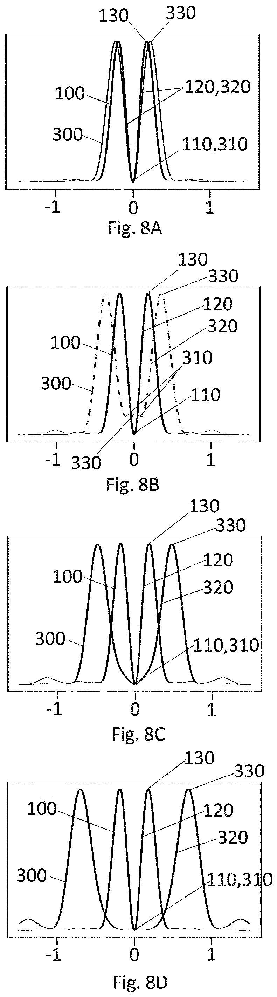

300, insbesondere eine STED-Lichtverteilung, erzeugt. Beide Lichtverteilungen haben ein lokales Intensitätsminimum 110, 310 und daran angrenzend Intensitätsanstiegsbereiche 120, 320 (siehe auch Fig. 8). Um das jeweilige lokale Intensitätsminimum 110, 310 herum weisen die Lichtverteilungen jeweils einen Bereich relativ geringer Lichtintensität auf. Dieser Bereich der Deaktivierungs-Lichtverteilung 300 ist dabei insbesondere breiter als der entsprechende Bereich der Anregungslichtverteilung 100. Die Deaktivierungs-Lichtverteilung 300 bildet insbesondere einen Mantel um einen Bereich der Anregungslichtverteilung 100.

Gemäß Schritt 102 wird die Probe 20 mit der Anregungslichtverteilung 100 und der Deaktivierungs-Lichtverteilung 300 beleuchtet, sodass ein zu lokalisierendes Molekül M in der Probe 20 von dem Anregungslicht angeregt wird und aufgrund dessen Photonen emittiert, während das Deaktivierungslicht die Emission von Hintergrund-Photonen von anderen Molekülen M in der Probe 20 unterdrückt.

In Schritt 103 werden durch das Molekül emittierte Photonen für verschiedene Positionierungen der Anregungslichtverteilung 100 mit einem Detektor, z.B. einem konfokal zum Fokus angeordneten Punktdetektor, erfasst.

Schließlich wird in Schritt 104 die Position des Moleküls M auf Basis der für die verschiedenen Positionierungen der Anregungslichtverteilung 100 erfassten Photonen bestimmt, z.B. mittels eines Maximum-Likelihood-Schätzers. Das Verfahren wird dabei insbesondere so durchgeführt, dass die Anregungslichtverteilung 100 und die Deaktivierungs-Lichtverteilung 300 während der verschiedenen Positionierungen der Anregungslichtverteilung 100 derart ausgebildet sind, dass eine effektive Detektions-PSF, insbesondere eine Breite der effektiven Emissions-Punktspreizfunktion, unbeeinflusst von der Deaktivierungs-Lichtverteilung 300 ist, also nur von der Anregungs-Lichtverteilung beeinflusst wird. Dies verbessert die Lokalisation bei gleichzeitiger Unterdrückung der Hintergrund-Emission. Selbstverständlich bedeutet die Darstellung der Fig. 1 als Blockschema nicht, dass die einzelnen Schritte des Verfahrens zwingend nacheinander ausgeführt werden.

Die **Fig. 2** zeigt eine Ausführungsform des erfindungsgemäßen Verfahrens, bei der es sich um eine MINFLUX-Lokalisierung handelt, die insbesondere in mehreren Iterationen durchgeführt wird, wobei das Minimum 110 der Anregungslichtverteilung 100 in jeder Iteration an einer Mehrzahl an Abtastpositionen 201 in einem Abtastbereich 200 um eine zuvor ermittelte geschätzte Position des Moleküls M angeordnet wird. Der Abtastbereich 200 ist dabei definiert als ein Kreis mit einem Radius L um eine geschätzte Position des zu lokalisierenden Moleküls. Die im initialen Schritt als Mittelpunkt des Abtastbereichs 200 gewählte Positionsschätzung kann mittels einer unabhängigen Methode (z.B. PALM/STORM-Mikroskopie, konfokaler Scan mit gaußförmiger Anregungslichtverteilung oder Pinhole-Orbit-Scan) ermittelt werden. Danach wird insbesondere jeweils die in der vorhergehenden MINFLUX-Iteration bestimmte Positionsschätzung als Zentrum des Kreises verwendet.

Die Abtastpositionen 201 einer Iteration bilden dabei einen sogenannten Satz von Zielkoordinaten (engl. *set of targeted coordinates,* STC, oder *target coordinate pattern,* TCP). Die einzelnen Abtastpositionen 201 können insbesondere auf einem Kreis mit dem Radius L um die geschätzte Position des Moleküls M liegen, wobei die Abtastpositionen 201 insbesondere symmetrisch um den Mittelpunkt angeordnet sind. Weiterhin wird insbesondere die geschätzte Position des Moleküls M ebenfalls als Abtastposition 201 verwendet. In Analogie zu dem in zwei Dimensionen dargestellten Beispiel kann die Probe 20 mit Abtastpositionen 201, die auf oder innerhalb einer Kugel mit dem Radius L liegen, in drei Dimensionen abgetastet werden, um eine dreidimensionale Lokalisation des Moleküls M durchzuführen (3D-MINFLUX). Zur Verlagerung der Anregungslichtverteilung 100 (und insbesondere auch der Deaktivierungs-Lichtverteilung 300) in z-Richtung (entlang der optischen Achse) kann dazu z.B. ein verformbarer Spiegel verwendet werden. Insbesondere innerhalb des Abtastbereichs 200 liegt ein Fangbereich 210, wobei das Molekül M mittels der erfindungsgemäßen Methode eindeutig lokalisierbar ist, sofern es sich innerhalb des Fangbereichs 210 aufhält.

Wie in **Fig. 2** gezeigt, kann der Radius L dabei in jedem Schritt kleiner werden, so dass auch die Genauigkeit der Positionsschätzung in jedem Schritt zunimmt, zumindest sofern das Molekül M sich in entsprechenden verkleinerten Abtastbereich 200 befindet. Das Verfahren wird typischerweise so lange durchgeführt, bis das Molekül M seine Emissionsfähigkeit verliert (z.B. durch Bleichen oder einen Übergang in einen Dunkelzustand im Fall von Fluorophoren) oder wenn möglich bis die Genauigkeit der Positionsschätzung sich einem Grenzwert annähert, der sich durch das Signal-Rausch-Verhältnis ergibt. Der gesamte Vorgang wird dann insbesondere mit mehreren weiteren Molekülen M wiederholt. Aus den mehreren Lokalisationen lässt sich dann ein hochauflösendes Bild der Probe mit den mehreren lokalisierten Molekülen M berechnen. Durch die beschriebene Verkleinerung des Abtastbereichs 200 ergibt sich auch jeweils ein kleinerer Fangbereich 210 als in dem vorhergehenden Iterationsschritt.

In **Fig. 2** ist weiterhin die Deaktivierungs-Lichtverteilung 300 schematisch als konzentrisch um den Abtastbereich 200 angeordneter Kreis dargestellt. An der durch den Kreis markierten Position kann die Intensität des Deaktivierungslichts z.B. der Sättigungsintensität oder einem niedrigeren Wert entsprechen.

Die Deaktivierungs-Lichtverteilung 300 kann, wie in Fig. 2 dargestellt, zumindest während einer MINFLUX-Iteration, und insbesondere auch über mehrere MINFLUX-Iterationen hinweg, stationär bleiben, während die Anregungs-Lichtverteilung 100 innerhalb eines Bereiches geringerer Deaktivierungslichtintensität um das lokale Minimum 310 der Deaktivierungs-Lichtverteilung 300 bewegt wird, um die Abtastpositionen 201 anzusteuern. Dies hat den Vorteil, dass schnelle Strahlablenkungseinrichtungen wie EODs nur für den Anregungslichtstrahl vorgesehen sein müssen, was die Komplexität der Vorrichtung senkt und einen kompakteren Aufbau ermöglicht. Die Deaktivierungs-Lichtverteilung 300 wird dann insbesondere zu Beginn jeder neuen Lokalisierung eines Moleküls M im Zentrum einer Projektion einer Detektionslochblende in die Fokusebene in einem entsprechenden Probenbereich angeordnet, insbesondere mit einem (im Vergleich zu den EODs langsameren aber ohnehin vorhanden) galvanometrischen Scanner. Insbesondere kann die Deaktivierungs-Lichtverteilung 300 zwischen den Iterationsschritten so angepasst werden, dass ein Bereich, in dem z. B. die Sättigungsintensität des Deaktivierungslichts oder eine geringere Lichtintensität herrscht, im Zuge der Verkleinerung des Abtastbereichs 200 in jedem Iterationsschritt kleiner wird (siehe Fig. 2). Dies kann insbesondere durch Steuerung der Gesamtintensität des Deaktivierungslichts oder auch durch eine unterschiedliche Strahlformung (z.B. unterschiedliche Phasenmuster auf einem SLM) erreicht werden.

Alternativ dazu kann die Anregungslichtverteilung 100 auch gemeinsam mit der der Deaktivierungs-Lichtverteilung 300 bewegt werden, so dass in jeder Iteration die lokalen Minima der beiden Lichtverteilungen gemeinsam nacheinander an den Abtastpositionen 201 angeordnet werden. Dies wird aufgrund der benötigten Abtastgeschwindigkeit insbesondere mittels einer gemeinsamen Strahlablenkung mit elektooptischen oder aktustooptischen Deflektoren durchgeführt.

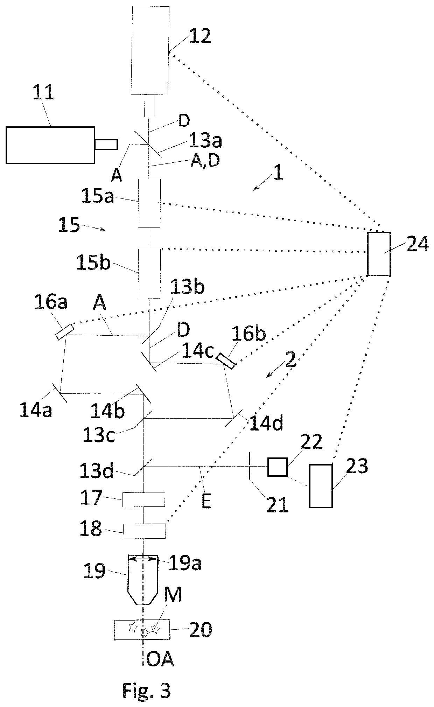

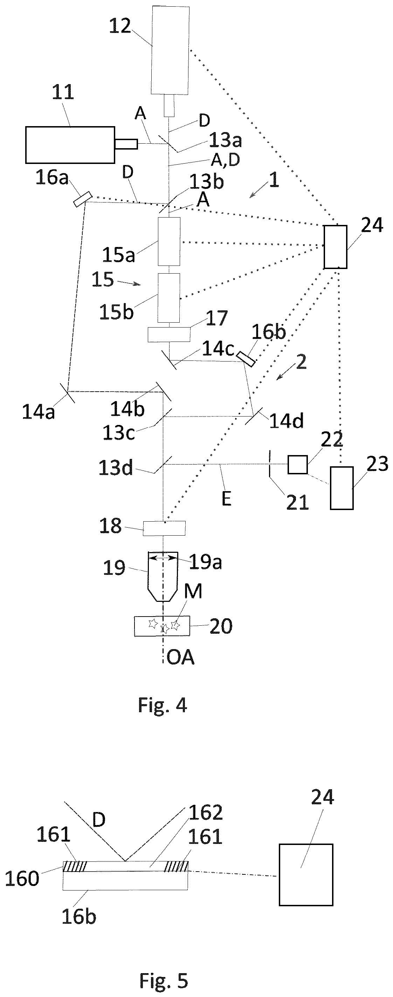

In den **Figuren 3 und 4** sind Ausführungsformen einer erfindungsgemäßen Vorrichtung 1 zum Bestimmen von Positionen eines Moleküls M in Form eines MINFLUX-Mikroskops mit zusätzlicher Deaktivierungs-(insbesondere STED-) Lichtquelle dargestellt. Das Grundprinzip der Vorrichtung wird zunächst anhand der **Fig. 3** erläutert. Anschließend wird auf Unterschiede der Ausführungsform gemäß der **Fig. 4** im Vergleich zu der Ausführungsform gemäß **Fig. 3** eingegangen.

Die **Fig. 3** zeigt eine Vorrichtung 1 mit einer ersten Lichtquelle 11, insbesondere einer Laserquelle, zur Erzeugung eines kohärenten Anregungslichtstrahls A und einer zweiten Lichtquelle 12, insbesondere einer Laserquelle, zur Erzeugung eines kohärenten Deaktivierungslichtstrahls D. Das Licht der ersten Lichtquelle 11 weist dabei eine geeignete Wellenlänge zur Anregung der Moleküle M in der Probe auf, und die zweite Lichtquelle 12 erzeugt Licht einer Wellenlänge, die zur Deaktivierung der Moleküle M geeignet ist, so dass die Moleküle bei Einstrahlung des Anregungslichts keine Photonen mehr emittieren können (z.B. Depletion durch stimulierte Emission, also STED). Die Wellenlängen des Anregungslichts und des Deaktivierungslichts unterscheiden sich insbesondere voneinander. Als Alternative zu zwei getrennten Lichtquellen 11, 12 kann die Vorrichtung 1 auch lediglich eine Lichtquelle, insbesondere Laserquelle, aufweisen, die sowohl das Anregungslicht als auch das Deaktivierungslicht erzeugt. Dazu kann die Lichtquelle z.B. ein Kontinuum von Wellenlängen erzeugen, aus dem dann, z.B. mittels optischer Filter, Anregungslicht und Deaktivierungslicht geeigneter Wellenlängen erhalten wird.

In dem in **Fig. 3** gezeigten Beispiel werden der Anregungslichtstrahl A und der Deaktivierungslichtstrahl D an einem ersten, insbesondere dichroitischen, Strahlteiler 13a in einen gemeinsamen Strahlengang eingekoppelt. Anschließend durchlaufen die Lichtstrahlen gemeinsam eine laterale Strahlablenkeinrichtung 15, die aus zwei in Serie im Strahlengang angeordneten Strahlablenkeinheiten 15a,15b, besteht. Bei den Strahlablenkeinheiten 15a,15b kann es sich z.B. um elektrooptische Deflektoren handeln, wobei die erste Strahlablenkeinheit 15a dazu ausgebildet ist, die ihn durchlaufenden Lichtstrahlen in einer ersten zur optischen Achse OA senkrechten Richtung x abzulenken, und wobei die zweite Strahlablenkeinheit 15b dazu ausgebildet ist, die ihn durchlaufenden Lichtstrahlen in einer zweiten zur optischen Achse OA senkrechten und zur ersten Richtung senkrechten Richtung y abzulenken. Die laterale Strahlablenkeinrichtung 15 weist in vorbekannter Weise insbesondere weitere optische Komponenten, insbesondere Linsen zur Fokussierung der Lichtstrahlen auf, die hier zur besseren Übersicht nicht dargestellt sind.

An einem zweiten, insbesondere dichroitischen, Strahlteiler 13b, werden der Anregungslichtstrahl A und der Deaktivierungs-Lichtstrahl D dann auf zwei parallele Strahlengänge aufgeteilt. Der Anregungslichtstrahl A trifft auf eine erste Strahlformungseinrichtung 16a, insbesondere einen ersten Lichtmodulator, weiter insbesondere einen phasenmodulierenden *spatial light modulator* SLM mit schaltbaren Pixeln. Durch Beugung des Anregungslichtstrahls A an einem Blaze-Gitter einer aktiven Oberfläche des Lichtmodulators wird dem Anregungslichtstrahl A ein mittels der schaltbaren Pixel eingestelltes Phasenmuster aufgeprägt, wodurch in der Fokusebene in der Probe 20 durch Interferenz die Anregungslichtverteilung 100 mit dem lokalen Minimum 110 entsteht. Der phasenmodulierte Anregungslichtstrahl A wird über einen ersten Spiegel 14a und einen zweiten Spiegel 14b wieder in den Hauptstrahlengang eingekoppelt.

In analoger Weise wird der Deaktivierungslichtstrahl D über einen dritten Spiegel 14c auf eine zweite Strahlformungseinrichtung 16b, insbesondere einen zweiten Lichtmodulator, gelenkt, der diesem ein voreingestelltes Phasenmuster aufprägt, das sich insbesondere von dem Phasenmuster der ersten Strahlformungseinrichtung 16a unterscheiden kann. Der phasenmodulierte Deaktivierungslichtstrahl D wird dann über einen vierten Spiegel 14d umgelenkt und dann über einen dritten, insbesondere dichroitischen, Strahlteiler 13c mit dem phasenmodulierten Anregungslichtstrahl A vereinigt. Selbstverständlich ist auch eine Konfiguration möglich, in welcher der Deaktivierungslichtstrahl D über Spiegel in den Hauptstrahlengang eingekoppelt wird und der Anregungslichtstrahl A über einen Strahlteiler mit dem Deaktivierungslichtstrahl D vereinigt wird.

Alternativ zu dem ersten Lichtmodulator 16a und dem zweiten Lichtmodulator 16b können z.B. auch Phasenplatten mit fest vorgegebenen Phasenmuster verwendet werden, welche dann typischerweise von den jeweiligen Lichtstrahlen durchlaufen werden (statt der Beugung an einem Gitter der aktiven Oberfläche des Lichtmodulators), um diesen die jeweiligen Phasenmuster aufzuprägen. Zusätzlich können vor den Strahlformungseinrichtungen 16a,16b optische Elemente angeordnet sein, welche die Polarisationsrichtung der jeweiligen Lichtstrahlen beeinflussen, z.B. $\lambda$/2-Platten (nicht gezeigt). Weiterhin kann insbesondere bei Aufprägung eines Vortex-Phasenmusters zur Erzeugung eines 2D-Donuts ein zirkular polarisierendes Element (z.B. eine $\lambda$/4-Platte) im Strahlengang hinter den Strahlformungseinrichtungen 16a,16b vorgesehen sein, um die gewünschte Lichtverteilung im Fokus zu erreichen (nicht dargestellt).

Die Strahlformungseinrichtungen 16a, 16b sind insbesondere jeweils in einer Ebene senkrecht zu der optischen Achse OA angeordnet, welche zu einer Pupille des Objektivs 19 konjugiert ist. Insbesondere im Fall von Lichtmodulatoren kann eine geringe Abweichung von dieser Position auch durch eine entsprechende Anpassung des Phasenmusters korrigiert werden.

Mittels der Strahlformungseinrichtungen 16a, 16b werden dem Anregungslichtstrahl A und dem Deaktivierungs-Lichtstrahl D insbesondere unterschiedliche Phasenmuster aufgeprägt, insbesondere so dass sich in der Fokusebene für die Deaktivierungs-Lichtverteilung 300 ein breiterer Bereich geringer Intensität (z.B. unterhalb der Sättigungsintensität) um das lokale Minimum 310 ergibt als für die Anregungsverteilung 100. Z.B. könnte für eine 2D-MINFLUX-Lokalisierung die Anregungslichtverteilung 100 als 2D-Donut ausgebildet sein, der durch eine Vortex-Phasenverteilung zwischen 0 und $2\pi$ erzeugt wird, während die Deaktivierungs-Lichtverteilung als breiterer 2D-Donut ausgebildet ist, der durch eine Vortex-Phasenverteilung zwischen 0 und $4\pi$, $6\pi$, $8\pi$ oder $10\pi$ erzeugt wird. Ebenso ist es z.B. möglich, dass für eine 3D-MINFLUX-Lokalisierung eine Anregungslichtverteilung 100 und eine Deaktivierungs-Lichtverteilung 300 jeweils in Form eines 3D-Donuts verwendet wird, wobei der 3D-Donut des Deaktivierungslichts zusätzlich axial gestreckt ist.

In dem gemeinsamen Strahlengang des Anregungslichtstrahls A und des Deaktivierungs-Lichtstrahls D befindet sich weiterhin eine axiale Strahlablenkeinrichtung 17, z.B. umfassend einen verformbaren Spiegel. Mithilfe der axialen Strahlablenkeinrichtung 17 können der Anregungslichtstrahl A und der Deaktivierungslichtstrahl D gemeinsam in z-Richtung, also parallel zur optischen Achse OA, verlagert werden, z.B. um Abtastpositionen 201 in der Probe in z-Richtung bei einer 3D-Lokalisierung des Moleküls M anzusteuern.

Schließlich ist im Strahlengang eine Scanvorrichtung 18, z.B. ein galvanometrischer Scanner, angeordnet, um den Anregungslichtstrahl A und den Deaktivierungslichtstrahl D gemeinsam über die Probe 20 zu scannen. Der Anregungslichtstrahl A und der Deaktivierungslichtstrahl D werden von einem Objektiv 19 mit einer Pupille 19a in eine Probe 20 fokussiert, welche voneinander beabstandete zu lokalisierende Moleküle M enthält. Zumindest das Objektiv 19 und die Scanvorrichtung 18 bilden dabei insbesondere eine optische Anordnung 2 zum Beleuchten der Probe 20 mit der Anregungslichtverteilung 100 und der Deaktivierungs-Lichtverteilung 300. Der Anregungslichtstrahl A und der Deaktivierungslichtstrahl D treten entlang einer optischen Achse in das Objektiv 19 ein.

Aufgrund der Anregung mit dem Anregungslicht emittieren die Moleküle Photonen (z.B. Fluoreszenzlicht). Das von der Probe 20 emittierte Licht E wird über die Scanvorrichtung 18 entscannt und über einen vierten, insbesondere dichroitischen, Strahlteiler 13d in einen Detektionsstrahlengang eingekoppelt. In diesem Detektionsstrahlengang befindet sich insbesondere eine Lochblende 21, welche konfokal zum Fokus des Anregungs- und Deaktivierungslichtstrahls in der Probe 20 angeordnet ist. Hinter der Lochblende 21 ist ein Detektor 22, im hier dargestellten Beispiel ein Punktdetektor, z.B. eine Avalanche-Photodiode oder ein Photomultiplier, angeordnet, welcher die von dem Molekül M emittierten Photonen erfasst und insbesondere zählt.

Weiterhin umfasst die Vorrichtung 1 eine Recheneinheit 23, die mit dem Detektor 22 in elektrischer Verbindung oder Datenverbindung steht und dazu ausgebildet ist, aus den von dem Detektor 22 erfassten Photonen und den zugeordneten Positionen des lokalen Minimums 110 der Anregungslichtverteilung 100 die Position des Moleküls M zu bestimmen, z.B. mittels eines Maximum-Likelihood-Schätzers, der software- oder hardwareseitig auf der Recheneinheit 23 implementiert ist. Um die zu den erfassten Photonenzahlen oder Photonenzählraten gehörenden Positionen der Anregungslichtverteilung 100 zu erhalten, empfängt die Recheneinheit 23 insbesondere ein Signal von der Steuereinheit 24 oder z.B. direkt von der lateralen Strahlablenkeinrichtung 15, der axialen Strahlablenkeinrichtung 17 und/oder der Scanvorrichtung 18.

Die Steuereinheit 24 ist weiterhin zur Steuerung der lateralen Strahlablenkeinrichtung 15, der axialen Strahlablenkeinrichtung 17, der Scanvorrichtung 18 sowie der Strahlformungseinrichtungen 16a und 16b ausgebildet.

Mit der in Fig. 3 gezeigten Vorrichtung 1 wird das erfindungsgemäße Verfahren insbesondere so ausgeführt, dass der Anregungslichtstrahl A und der Deaktivierungslichtstrahl D in einer Mehrzahl von MINFLUX-Iterationen gemeinsam mittels der lateralen Strahlablenkeinrichtung 15 (und optional auch mittels der axialen Strahlablenkeinrichtung 17) relativ zu der Probe 20 bewegt werden. Dabei werden die Abtastpositionen 201 (siehe Fig. 2) mit dem lokalen Minimum 110 der Anregungslichtverteilung 100 abgetastet, und mittels des Detektors 22 werden für jede Abtastposition 201 die von dem Molekül M emittierten Photonen erfasst. Anschließend wird für jede MINFLUX-Iteration mittels der Recheneinheit 23 aus den erfassten Photonen und den zugehörigen Positionen der Anregungslichtverteilung 100 eine geschätzte Position des Moleküls M bestimmt.

**Fig. 4** zeigt eine erfindungsgemäße Vorrichtung 1, die sich von der in Fig. 3 gezeigten Vorrichtung 1 dadurch unterscheidet, dass die laterale Strahlablenkeinrichtung 15 und die axiale Strahlablenkeinrichtung 17 in einem Teilstrahlengang angeordnet ist, über welchen der Anregungslichtstrahl A auf die Probe 20 gelenkt wird. Der Deaktivierungslichtstrahl D wird hingegen auf einem parallelen Teilstrahlengang ohne entsprechende Strahlablenkeinrichtungen geführt. Die Lichtstrahlen A, D werden mittels des zweiten, insbesondere dichroitischen, Strahlteilers 13b auf die Teilstrahlengänge aufgeteilt und über den dritten, insbesondere dichroitischen, Strahlteiler 13c wieder zusammengeführt. In den entsprechenden Teilstrahlengängen befinden sich ebenfalls die im Zusammenhang mit Fig. 3 beschriebenen Strahlformungseinrichtungen 16a,16b.

Bei der Verwendung der in **Fig. 4** dargestellten Ausführungsform der Vorrichtung 1 werden insbesondere vor der Lokalisierung eines Moleküls M der Anregungslichtstrahl A und der Deaktivierungslichtstrahl D gemeinsam mittels der Scanvorrichtung 18 auf einen Bereich der Probe 20 gerichtet, in dem das zu lokalisierende Molekül M gemäß einer Vorlokalisation vermutet wird. Dann wird der Anregungslichtstrahl A mittels der lateralen Strahlablenkeinrichtung 15 und optional auch mittels der axialen Strahlablenkeinrichtung 17 über die Probe bewegt, um die Abtastpositionen 201 mit dem lokalen Minimum 110 der Anregungslichtverteilung 100 anzusteuern. Währenddessen bleibt die Deaktivierungslichtverteilung 300 insbesondere stationär.

Die **Fig. 5** zeigt eine schematische Darstellung einer zweiten Strahlformungseinrichtung 16b zur Phasenmodulation des Deaktivierungslichtstrahls D im Querschnitt. Die zweite Strahlformungseinrichtung weist eine aktive Oberfläche 160 mit einem Blaze-Gitter auf, welches den einfallenden Deaktivierungslichtstrahl D in einer gewünschten Ordnung beugt und somit in den weiteren Strahlengang einkoppelt, so dass der Deaktivierungslichtstrahl von dem Objektiv 19 in die Probe 20 fokussiert wird. Auf der aktiven Oberfläche lässt sich weiterhin ein Phasenmuster mit dem Blaze-Gitter überlagern, so dass dem Deaktivierungslichtstrahl D eine entsprechende Phasenverteilung aufgeprägt wird, die am Fokus durch Interferenz die Deaktivierungs-Lichtverteilung 300 bildet. Die aktive Oberfläche 160 ist insbesondere eine zu der Pupille 19a des Objektivs 19 konjugierte Ebene (siehe Fig. 3-4). Das Phasenmuster lässt sich insbesondere in Form von steuerbaren Pixeln erzeugen, wobei für jedes Pixel ein Phasenwert vorgegeben werden kann. Das Phasenmuster und insbesondere auch die Orientierung des Blaze-Gitters sind mittels der Steuereinheit 24 steuerbar.

In der **Fig. 5** ist weiterhin ein äußerer Bereich 161 der aktiven Oberfläche 160 und ein von dem äußeren Bereich 161 umschlossener innerer Bereich 162 der aktiven Oberfläche 160 schematisch dargestellt.

Mittels der Steuereinheit 24 kann in dem äußeren Bereich 161 die Orientierung des Blaze-Gitters so geändert werden, dass der Deaktivierungs-Lichtstrahl D nicht in den Strahlengang eingekoppelt wird, sondern z.B. in eine Strahlfalle (nicht gezeigt). Auf diese Weise kann der Strahlquerschnitt des Deaktivierungs-Lichtstrahls D so verringert werden, dass die Pupille 19a des Objektivs 19 unterleuchtet wird und somit die Deaktivierungs-Lichtverteilung 300 in Richtung der optischen Achse OA (d.h. axial) gestreckt wird.

In einer anderen Ausführungsform kann in dem inneren Bereich 162 das erste Phasenmuster zur Erzeugung der Deaktivierungs-Lichtverteilung 300 dargestellt werden und in dem äußeren Bereich 161 ein zweites Phasenmuster dargestellt werden, welches effektiv zur Verminderung des Strahlquerschnitts des Deaktivierungs-Lichtstrahls D und somit zu einer axialen Streckung der Deaktivierungs-Lichtverteilung 300 führt.

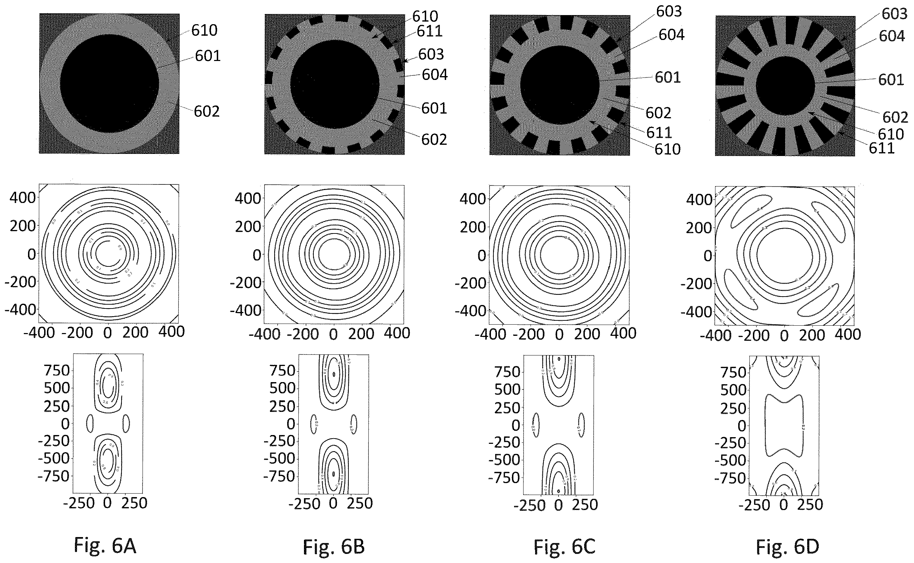

In den Figuren **6 bis 7 und 9 bis 10** sind Phasenuster (Fig. 6A-D, oben) gezeigt, die beispielsweise auf einer aktiven Oberfläche 160 einer Strahlformungseinrichtung 16a, 16b erzeugt werden können, um die Phasenverteilung des Anregungslichtstrahls A oder des Deaktivierungs-Lichtstrahls D, insbesondere des Deaktivierungs-Lichtstrahls D, zu modulieren, so dass am Fokus des jeweiligen Lichtstrahls in der Probe 20 durch Interferenz eine entsprechende Lichtintensitätsverteilung mit einem lokalen Minimum entsteht. Unterhalb der Phasenmuster sind Höhenlinien-Diagramme von entsprechenden simulierten Lichtverteilungen dargestellt, und zwar jeweils als Schnitt durch die Fokusebene (x-y-Ebene, senkrecht zur optischen Achse, wobei die z-Koordinate Null beträgt, Fig. 6A-D, Mitte) und als Schnitt in der y-z-Ebene, wobei die x-Koordinate Null beträgt (Fig. 6A-D, unten). Die Ortskoordinaten in Fig. 6A-D Mitte und unten sind jeweils in der Einheit Mikrometer angegeben. Die Phasenmuster werden insbesondere in einer Ebene erzeugt, die zu der Ebene der Pupille 19a des Objektivs 19 konjugiert ist.

Fig. 6A (oben) zeigt ein erstes Phasenmuster 610 aus einem ersten Ring 602, der konzentrisch um eine Kreisscheibe 601 angeordnet ist, wobei der erste Ring 602 und die Kreisscheibe 601 einen Phasenunterschied von $\pi$ zueinander aufweisen. Mit einem solchen Phasenmuster lässt sich am Fokus des phasenmodulierten Lichtstrahls ein 3D-Donut (auch als *bottle beam* bezeichnet) mit einem zentralen lokalen Minimum 310 erzeugen.

In den Figuren 6B bis 6D (oben) ist ebenfalls jeweils ein erstes Phasenmuster 610 gezeigt, das einen konzentrisch um eine Kreisscheibe 601 angeordneten ersten Ring 602 aufweist, wobei die Kreisscheibe 601 und der erste Ring 602 einen Phasensprung von $\pi$ aufweisen. Jedoch ist der Radius des ersten Rings 602 und der Kreisscheibe 601 jeweils geringer als bei dem ersten Phasenmuster 610 gemäß Fig. 6A (oben). Zusätzlich ist in Fig. 6B-6D ein weiteres zweites Phasenmuster 611 dargestellt, das einen zweiten Ring 603 aufweist, der konzentrisch um den ersten Ring 602 des ersten Phasenmusters 610 herum angeordnet ist. Dieser zweite Ring 603 weist eine Mehrzahl an Segmenten 604 auf, die alternierend Phasenwerte aufweisen, die dem Phasenwert des ersten Rings 602 und dem Phasenwert der Kreisscheibe 601 entsprechen. Dementsprechend weisen die auf dem zweiten Ring 603 benachbarten Segmente 604 Phasensprünge von $\pi$ zueinander auf. In dem hier gezeigten Beispiel weisen alle Segmente 604 identische Abmessungen aus und sind somit symmetrisch um den ersten Ring 602 herum angeordnet.

Wie aus dem Vergleich zwischen den Höhenliniendiagrammen in Fig. 6A (unten) und Fig. 6B (unten) ersichtlich ist, führt das zusätzliche zweite Phasenmuster 611 mit dem segmentierten zweiten Ring 603 zu einer Streckung des 3D-Donuts in der axialen Richtung (z-Richtung). Demgegenüber ergibt sich nur eine geringe Veränderung der Lichtintensitätsverteilung in der Fokusebene (Fig. 6A und 6B, Mitte). Die Streckung einer 3D-Donut-förmigen Deaktivierungs-Lichtverteilung 300 in z-Richtung ist für das erfindungsgemäße Verfahren vorteilhaft, da dadurch die Hintergrundemission aus in z-Richtung über und unter dem Fokus liegenden Bereichen effektiv unterdrückt werden kann.

Weiterhin ist aus den Figuren 6C und 6D ersichtlich, dass sich durch eine Verbreiterung des zweiten Rings 603 in radialer Richtung nach innen bei gleichzeitiger Verkleinerung der Kreisscheibe 601 eine noch weitere Streckung in z-Richtung erreichen lässt als für den in Fig. 6A gezeigten Fall. Bei der in Fig. 6D gezeigten Konfiguration ist zusätzlich eine Verbreiterung des zentralen lokalen Minimums 310 in der Fokusebene sichtbar (Fig. 6D, Mitte), was sich ebenfalls vorteilhaft auf die Unterdrückung der Hintergrundfluoreszenz auswirken kann.

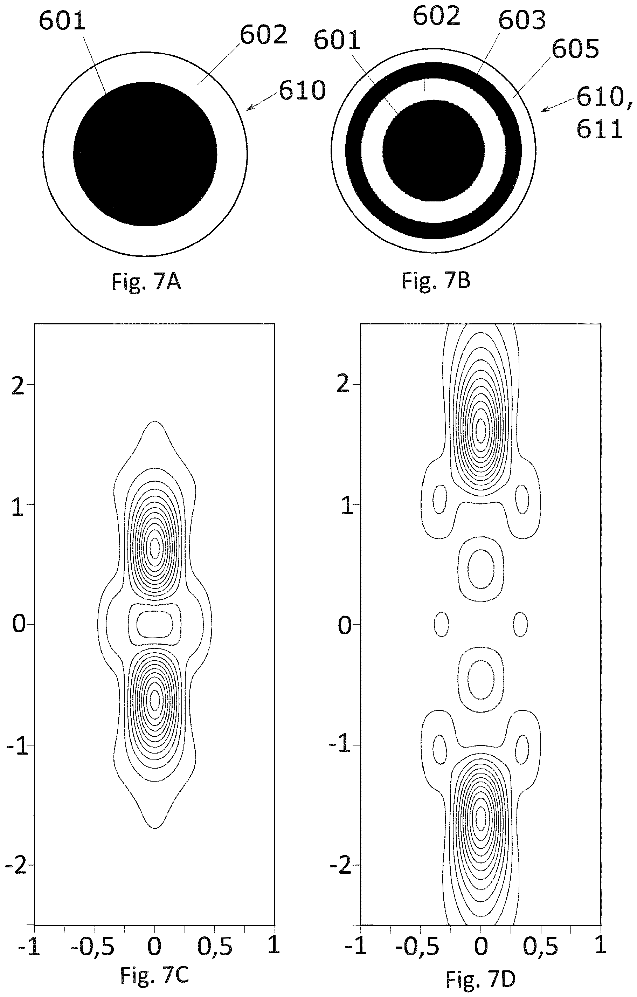

In den **Figuren 7A und 7B** sind weitere Phasenmuster zur Phasenmodulation des Deaktivierungslichtstrahls gezeigt. Fig. 7C-D zeigen entsprechende Höhenliniendiagramme der am Fokus erhaltenen Lichtintensitätsverteilung in der XZ-Ebene, wobei Fig. 7C dem in Fig. 7A gezeigten Phasenmuster und Fig. 7D dem in Fig. 7B gezeigten Phasenmuster zugeordnet ist. Fig. 7A zeigt ebenso wie Fig. 6A ein erstes Phasenmuster, das aus einer Kreisscheibe 601 und einem konzentrisch um die Kreisscheibe 601 angeordneten ersten Ring 602 mit einem Phasenunterschied von $\pi$ gebildet ist. Entsprechend zeigt Fig. 7C das Höhenliniendiagramm eines 3D-Donuts.

Gemäß Fig. 7B ist zusätzlich zu der Kreisscheibe 601 und dem ersten Ring 602 ein zweiter Ring 603 und ein dritter Ring 605 vorgesehen, wobei benachbarte Ringe jeweils einen Phasenunterschied von $\pi$ zueinander aufweisen. Dadurch ergibt sich am Fokus vorteilhafterweise eine in z-Richtung gestreckte Intensitätsverteilung (Fig. 7D). Die Skalen sind in der Einheit $\mu$m angegeben.

**Fig. 8 A-D** zeigen Plots entlang einer Richtung in der Fokusebene (z.B. entlang der x-Koordinate) einer simulierten 2D-donutförmigen Anregungslichtverteilung 100 mit einer Wellenlänge von 642 nm jeweils überlagert mit simulierten 2D-donutförmigen Deaktivierungs-Lichtverteilungen 300 unterschiedlicher Form und Breite mit einer Wellenlänge von 775 nm. Die Skala der x-Achse ist in der Einheit Mikrometer angegeben. Die Anregungslichtverteilung 100 weist ein zentrales lokales Minimum 110 auf und die Deaktivierungs-Lichtverteilungen 300 weisen jeweils mindestens ein lokales Minimum 310 auf. Angrenzend an die lokalen Minima 110, 310 weisen die Verteilungen 100, 300 Intensitätsanstiegsbereiche 120, 320 und jeweils mindestens zwei lokale Maxima 130, 330 auf. Die Anregungslichtverteilung 100 wurde durch Phasenmodulation des Anregungslichtstrahls A mit einem vortexförmigen Phasenmuster in einer zur Objektivpupille konjugierten Ebene erzeugt, welches in einer Umfangsrichtung bezüglich der optischen Achse im Uhrzeigersinn graduell von 0 bis $2\pi$ steigende Phasenwerte aufweist. Zusätzlich wurde das der Anregungslichtstrahl A links zirkular polarisiert, so dass sich in der Fokusebene durch Interferenz die Anregungslichtverteilung 100 ergibt.

Die in Fig. 8A gezeigte Deaktivierungs-Lichtverteilung 300 wurde durch Phasenmodulation des Deaktivierungs-Lichtstrahls 100 mit demselben vortexförmigen Phasenmuster, ebenfalls mit linkszirkularer Polarisation, erzeugt. Die lokalen Minima 110, 310 der Verteilungen 100, 300 befinden sich hier an derselben Position. Die Deaktivierungs-Lichtverteilung 300 nach Fig. 8A ist aufgrund der höheren Wellenlänge geringfügig breiter als die Anregungslichtverteilung 100.

Die in den Figuren 8B bis 8D gezeigten Deaktivierungs-Lichtverteilungen 300 wurden im Gegensatz dazu mit vortexförmigen Phasenmustern erzeugt, die in der Umfangsrichtung graduell ansteigende erste Phasenmuster zwischen 0 und $4\pi$ (Fig. 8B), 0 und $6\pi$ (Fig. 8C) bzw. 0 und $10\pi$ (Fig. 8D) aufweisen. Infolgedessen weisen die Deaktivierungs-Lichtverteilungen 300 mit steigendem maximalem Phasenwert eine steigende Breite, d.h. einen größeren Abstand zwischen den an das lokale Minimum 110, 310 angrenzenden lokalen Maxima 130, 330 und einen umso breiteren Bereich relativ geringer Lichtintensität zwischen den lokalen Maxima 130, 330 auf. Dieser Bereich ist für ein Maximum von $10\pi$ besonders breit. Vorteilhafterweise reduziert das Deaktivierungslicht dieser Verteilungen zwar die Hintergrundfluoreszenz, beeinflusst aber die Detektions-PSF des Emissionslichts nicht wesentlich.

Die in Fig. 8B gezeigte Deaktivierungs-Lichtverteilung 300 weist an der Position des Minimums der Anregungslichtverteilung 100 ein weiteres lokales Maximum 330 auf. Dieser Effekt ergibt sich bei diesem speziellen Phasenmuster (Vortexmuster von 0 bis $4\pi$) aus der Polarisationsrichtung des Lichts.

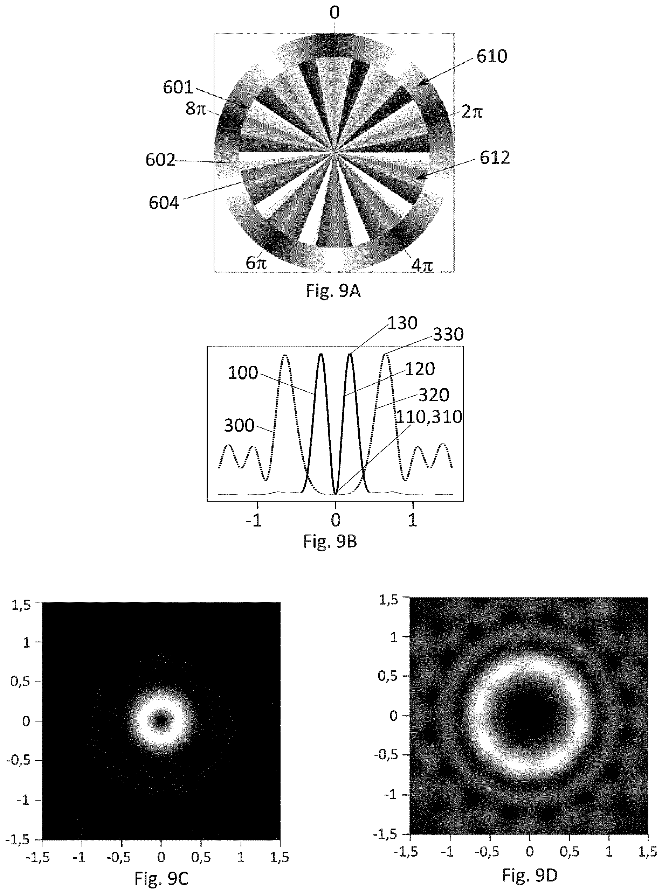

**In Fig. 9A** ist ein erstes Phasenmuster 610 zur Erzeugung der in Fig. 9B und 9D dargestellten Deaktivierungs-Lichtverteilung 300 gezeigt, das mit einem dritten Phasenmuster 612 zur Erzeugung von Nebenmaxima überlagert ist. Das erste Phasenmuster 610 ist vortexförmig mit in Umfangsrichtung von 0 bis $10\pi$ ansteigender Phase. Dieses Muster ist mit einem dritten Phasenmuster 612 in Form einer in Segmente 604 unterteilten Kreisscheibe 601 überlagert, wobei die Segmente 604 relativ zu dem in radialer Richtung angrenzenden Bereich des ersten Ringes 602 einen Phasenunterschied von $+\dfrac{\pi}{2}$ oder $-\dfrac{\pi}{2}$ aufweisen. Der äußere Bereich des überlagerten Phasenmusters, auf dem der mehrfach vortexförmige Phasenverlauf am besten erkennbar ist, bildet einen ersten Ring 602, der konzentrisch um die Kreisscheibe 601 angeordnet ist. Die Segmente 604 mit positivem und negativem Phasensprung zu dem ersten Ring 602 sind dabei alternierend angeordnet. Dementsprechend weisen in der Umfangsrichtung benachbarte Segmente 604 zueinander jeweils einen Phasenunterschied von $\pi$ auf.

Mit dem gezeigten Phasenmuster lässt sich eine 2D-donutförmige Deaktivierungs-Lichtverteilung 300 mit breitem Bereich niedriger Intensität um das zentrale lokale Minimum 310 (s. Fig. 8D) und zusätzlichen Nebenmaxima der Lichtintensität erzeugen. Diese Nebenmaxima unterdrücken vorteilhafterweise die Hintergrundemission in weiter vom Fokus entfernten Bereichen.

Fig. 9B zeigt einen Plot der Deaktivierungs-Lichtverteilung 300 entlang der x-Koordinate. In Fig. 9D ist ein 2D-Plot der Deaktivierungs-Lichtverteilung 300 in der xy-Ebene gezeigt und die Fig. 9C zeigt zum Vergleich einen xy-Plot eines 2D-Donuts der in Fig. 8A dargestellten Deaktivierungs-Lichtverteilung 300.

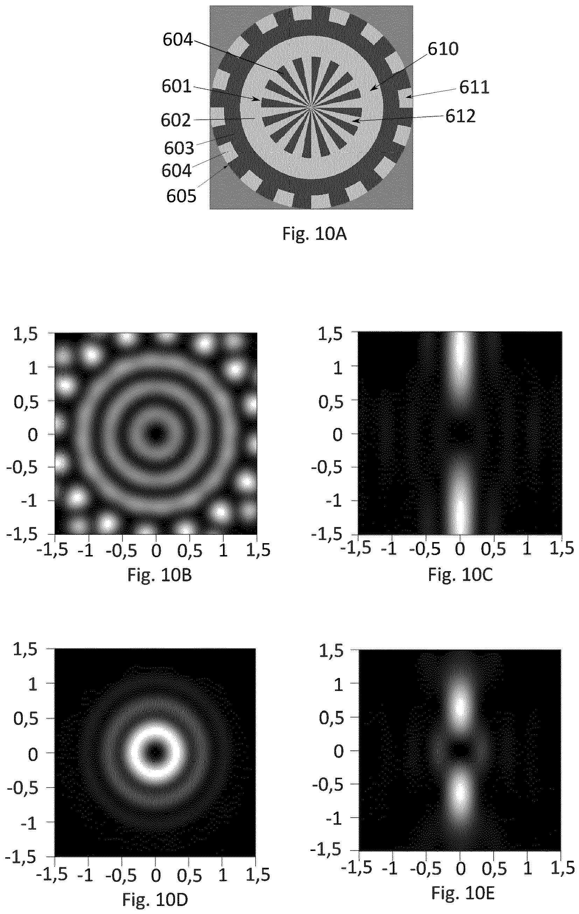

In Fig. 10A ist ein weiteres erstes Phasenmuster 610 zur Phasenmodulation des Deaktivierungslichts dargestellt, das mit einem zweiten Phasenmuster 611 zur Streckung der Deaktivierungs-Lichtverteilung 300 in z-Richtung sowie mit einem dritten Phasenmuster 612 zur Erzeugung von Nebenmaxima überlagert ist. Das erste Phasenmuster 610 weist einen ersten Ring 602 und einen konzentrisch um den ersten Ring 602 angeordneten zweiten Ring 603 auf, wobei der erste Ring 602 und der zweite Ring 603 zueinander einen Phasenunterschied von $\pi$ aufweisen, so dass am Fokus ein 3D-Donut gebildet wird. Das zweite Phasenmuster 611 ist durch einen konzentrisch um den zweiten Ring 603 herum angeordneten dritten Ring 605 gebildet, der in alternierende Segmente 604 eingeteilt ist, wobei die Segmente 604 relativ zu dem zweiten Ring 603 alternierend Phasenunterschiede von 0 bzw. $\pi$ aufweisen. Das dritte Phasenmuster 612 bildet eine konzentrisch innerhalb des ersten Rings 602 angeordnete Kreisscheibe 601, die in wiederum in Segmente 604 unterteilt ist, welche relativ zu dem ersten Ring 602 alternierend Phasenunterschiede von 0 bzw. $\pi$ aufweisen.

Fig. 10B und 10C zeigen eine entsprechende durch das in Fig. 10A gezeigte Phasenmuster erzeugte Deaktivierungs-Lichtverteilung 300 im Fokus, wobei Fig. 10B einen x-y-Schnitt (Fokusebene) und Fig. 10C einen x-z-Schnitt darstellt. In den Figuren 10D und 10E sind zum Vergleich Schnitte durch einen regulären 3D-Donut, d.h., *bottle beam* (siehe Phasenmuster Fig. 6A und 7A) dargestellt. Alle Skalen weisen die Einheit $\mu$m auf.

Wie insbesondere aus Fig. 10B hervorgeht, entstehen durch das dritte Phasenmuster 612 Nebenmaxima, die sich vorteilhaft auf die Unterdrückung der Hintergrundemission durch das Deaktivierungslicht auswirken. Zusätzlich ist die Deaktivierungs-Lichtverteilung 300 durch das zweite Phasenmuster 611 in z-Richtung gestreckt, wie aus Fig. 10C ersichtlich ist.

BEZUGSZEICHENLISTE

| | |
|---|---|
| 1 | Vorrichtung zum Bestimmen von Positionen eines Moleküls |
| 2 | Optische Anordnung |
| 11 | Anregungs-Lichtquelle |
| 12 | Deaktivierungs-Lichtquelle |
| 13a | Erster Strahlteiler |
| 13b | Zweiter Strahlteiler |
| 13c | Dritter Strahlteiler |
| 13d | Vierter Strahlteiler |
| 14a | Erster Spiegel |
| 14b | Zweiter Spiegel |
| 14c | Dritter Spiegel |
| 14d | Vierter Spiegel |
| 15 | Laterale Strahlablenkeinrichtung |
| 15a | Erste Strahlablenkeinheit |
| 15b | Zweite Strahlablenkeinheit |
| 16a | Erste Strahlformungseinrichtung |
| 16b | Zweite Strahlformungseinrichtung |
| 17 | Axiale Strahlablenkeinrichtung |
| 18 | Scanvorrichtung |
| 19 | Objektiv |
| 19a | Pupille |
| 20 | Probe |
| 21 | Lochblende |
| 22 | Detektor |
| 23 | Recheneinheit |
| 24 | Steuereinheit |
| 100 | Anregungslichtverteilung |
| 101 | Erzeugen einer Mehrzahl an Lichtverteilungen |
| 102 | Beleuchten mit der Anregungslichtverteilung |
| 103 | Erfassen von emittierten Photonen |
| 104 | Ableiten der Position des Moleküls |
| 110 | Lokales Minimum der Anregungslichtverteilung |
| 120 | Intensitätsanstiegsbereich der Anregungslichtverteilung |

| | |
|---|---|
| 130 | Lokales Maximum der Anregungslichtverteilung |
| 160 | Aktive Oberfläche |
| 161 | Äußerer Bereich |
| 162 | Innerer Bereich |
| 200 | Abtastbereich |
| 201 | Abtastposition |
| 210 | Fangbereich |
| 300 | Deaktivierungs-Lichtverteilung |
| 310 | Lokales Minimum der Deaktivierungs-Lichtverteilung |
| 320 | Intensitätsanstiegsbereich der Deaktivierungs-Lichtverteilung |
| 330 | Lokales Maximum der Deaktivierungs-Lichtverteilung |
| 601 | Kreisscheibe |
| 602 | Erster Ring |
| 603 | Zweiter Ring |
| 604 | Segment |
| 605 | Dritter Ring |
| 610 | Erstes Phasenmuster |
| 611 | Zweites Phasenmuster |
| 612 | Drittes Phasenmuster |
| A | Anregungslichtstrahl |
| D | Deaktivierungslichtstrahl |
| E | Emittiertes Licht |
| L | Radius |
| M | Molekül |
| OA | Optische Achse |

**Patentansprüche**

1. Verfahren zum Bestimmen von Positionen von voneinander beabstandeten Molekülen (M) in einer oder mehreren Raumrichtungen in einer Probe (20) mit den Schritten:

   - Erzeugen (101) einer Mehrzahl an Lichtverteilungen, wobei jede Lichtverteilung ein lokales Intensitätsminimum (110, 310) und daran angrenzend Intensitätsanstiegsbereiche (120, 320) aufweist, wobei die Lichtverteilungen eine Anregungslichtverteilung (100) und eine Deaktivierungs-Lichtverteilung (300), insbesondere eine STED-Lichtverteilung, umfassen,
   - Beleuchten (102) der Probe (20) mit der Anregungslichtverteilung (100) und der Deaktivierungs-Lichtverteilung (300),
   - Erfassen (103) von durch das Molekül (M) emittierten Photonen für verschiedene Positionierungen der Anregungslichtverteilung (100) und
   - Ableiten (104) der Position des Moleküls (M) auf Basis der für die verschiedenen Positionierungen der Anregungslichtverteilung (100) erfassten Photonen,

   wobei das lokale Minimum (110) der Anregungslichtverteilung (100) nacheinander an einer Mehrzahl von Abtastpositionen (201) innerhalb eines Abtastbereiches (200) angeordnet wird,
**dadurch gekennzeichnet,**
**dass** die Lichtintensität des Deaktivierungslichts in einem dem Abtastbereich (200) zugeordneten Fangbereich (210), in dem die Position des Moleküls (M) aus den Abtastpositionen (201) und den zugeordneten erfassten Photonen eindeutig ableitbar ist, maximal einer Sättigungsintensität entspricht.

2. Verfahren nach Anspruch 1, **dadurch gekennzeichnet, dass** die Anregungslichtverteilung (100) umpositioniert wird, während die Deaktivierungs-Lichtverteilung (300) ortsfest belassen wird, sodass das lokale Minimum (110) der Anregungslichtverteilung (100) mehrfach unterschiedlich innerhalb einer Umgebung des lokalen Intensitätsminimums (310) der Deaktivierungs-Lichtverteilung (300) positioniert wird.

3. Verfahren nach Anspruch 1, **dadurch gekennzeichnet, dass** die Anregungslichtverteilung (100) und die Deaktivierungs-Lichtverteilung (300) gemeinsam umpositioniert werden.

4. Verfahren nach einem der vorhergehenden Ansprüche, **dadurch gekennzeichnet, dass** ein Bereich zwischen zwei an das lokale Intensitätsminimum der Deaktivierungs-Lichtverteilung (300) angrenzenden lokalen Maxima (330) der Deaktivierungs-Lichtverteilung (300) zumindest in einer Raumrichtung weiter, insbesondere mindestens 10 % weiter ausgedehnt ist als ein entsprechender Bereich zwischen zwei an das lokale Minimum (110) der Anregungslichtverteilung (100) angrenzenden lokalen Maxima (130) der Anregungslichtverteilung (100).

5. Verfahren nach einem der vorhergehenden Ansprüche, **dadurch gekennzeichnet, dass** eine Mehrzahl an Abtastschritten durchgeführt wird, wobei das lokale Minimum der Anregungslichtverteilung (100) in jedem der Abtastschritte an einer Mehrzahl der Abtastpositionen (201) eines jeweiligen Abtastbereiches (200) positioniert wird, wobei der jeweilige Abtastbereich (200) jedes Abtastschritts eine geringere Fläche oder ein geringeres Volumen aufweist als die Abtastbereiche (200) der vorhergehenden Abtastschritte, und die Deaktivierungs-Lichtverteilung (300) in zumindest einem Teil der Abtastschritte in Abhängigkeit der Fläche oder des Volumens des jeweiligen Abtastbereiches (200) angepasst wird, wobei eine Gesamtintensität und/oder eine Form der Deaktivierungs-Lichtverteilung (300) in Abhängigkeit der Fläche oder des Volumens des jeweiligen Abtastbereiches (200) angepasst wird.

6. Verfahren nach einem der vorhergehenden Ansprüche, **dadurch gekennzeichnet, dass** die Deaktivierungs-Lichtverteilung (300) während des Umpositionierens der Anregungslichtverteilung (100) konstant bleibt.

7. Verfahren nach einem der vorhergehenden Ansprüche, **dadurch gekennzeichnet, dass** die Deaktivierungs-Lichtverteilung (300) als 2D-Donut oder 3D-Donut ausgebildet wird.

8. Verfahren nach Anspruch 7, **dadurch gekennzeichnet, dass** der 2D-Donut durch Phasenmodulation des Deaktivierungslichts mit einem ersten Phasenmuster (610) erzeugt wird, wobei das erste Phasenmuster (610) eine in einer Umfangsrichtung bezüglich einer optischen Achse, insbesondere kontinuierlich, von 0 auf $2n \cdot \pi$ ansteigende Phase aufweist, wobei *n* eine natürliche Zahl ist, welche größer als 1 ist.

9. Verfahren nach einem der vorhergehenden Ansprüche, **dadurch gekennzeichnet, dass** die Deaktivierungs-Lichtverteilung (300) durch Einstrahlen eines Deaktivierungs-Lichtstrahls (D) auf die Probe (20) entlang einer optischen Achse (OA) gebildet wird, wobei der Deaktivierungs-Lichtstrahl (D) mittels eines Objektivs (19) in die Probe (20) fokussiert wird, und wobei ein Strahlquerschnitt des Deaktivierungs-Lichtstrahls (D) so angepasst wird, dass eine Pupille (19a) des Objektivs (19) unterleuchtet wird, so dass die Deaktivierungs-Lichtverteilung (300) in Richtung der optischen Achse (OA) gestreckt wird.

10. Verfahren nach Anspruch 9, **dadurch gekennzeichnet, dass** der Strahlquerschnitt des Deaktivierungs-Lichtstrahls durch Anpassung einer aktiven Oberfläche (160) einer Strahlformungseinrichtung (16a, 16b), insbesondere eines Lichtmodulators, angepasst wird.

11. Verfahren nach Anspruch 10, **dadurch gekennzeichnet, dass**

    - eine Orientierung eines Blaze-Gitters in einem äußeren Bereich (161) der aktiven Oberfläche der Strahlformungseinrichtung (16a, 16b) angepasst wird oder
    - ein zweites Phasenmuster (611) auf der aktiven Oberfläche der Strahlformungseinrichtung (16a, 16b) erzeugt wird, insbesondere wobei das zweite Phasenmuster (611) als in einer Umfangsrichtung zu der optischen Achse (OA) erstreckter Ring (603) ausgebildet ist, insbesondere wobei der Ring (603) eine Mehrzahl an Segmenten (604) aufweist, wobei aneinander angrenzende Segmente (604) jeweils einen Phasenunterschied von $\pi$ zueinander aufwei-

sen.

12. Verfahren nach Anspruch 9 oder 10, **dadurch gekennzeichnet, dass** der Deaktivierungs-Lichtstrahl (D) zumindest näherungsweise als Bessel-Strahl ausgebildet wird, insbesondere mittels eines Axikons oder eines Lichtmodulators.

13. Vorrichtung (1), insbesondere Mikroskop, zum Bestimmen von Positionen von voneinander beabstandeten Molekülen (M) in einer oder mehreren Raumrichtungen in einer Probe (20), insbesondere nach einem Verfahren gemäß einem der Ansprüche 1 bis 12, aufweisend

    - mindestens eine Lichtquelle (11,12) zum Erzeugen eines Anregungslichtstrahls (A) und eines Deaktivierungslichtstrahls (D), insbesondere eines STED-Lichtstrahls,
    - mindestens eine Strahlformungseinrichtung (16a, 16b) zum Bilden einer Anregungs-Lichtverteilung (100) aus dem Anregungslichtstrahl (A) und einer Deaktivierungs-Lichtverteilung (300) aus dem Deaktivierungslichtstrahl (D), wobei die Anregungslichtverteilung (100) und die Deaktivierungs-Lichtverteilung (300) jeweils ein lokales Intensitätsminimum (110, 310) und daran angrenzend Intensitätsanstiegsbereiche (120, 320) aufweisen,
    - eine optische Anordnung (2) zum Beleuchten der Probe (20) mit der Anregungslichtverteilung (100) und der Deaktivierungs-Lichtverteilung (300),
    - mindestens einen Detektor (22) zum Erfassen von durch das Molekül (M) emittierten Photonen für verschiedene Positionierungen der Anregungslichtverteilung (100) und
    - eine Recheneinheit (23) zum Ableiten der Position des Moleküls (M) auf Basis der für die verschiedenen Positionierungen der Anregungslichtverteilung (100) erfassten Photonen,

    wobei
    die Vorrichtung (1) mindestens eine Strahlablenkeinrichtung (15a, 15b, 17) aufweist, die dazu ausgebildet ist, das lokale Minimum der Anregungslichtverteilung (100) nacheinander an einer Mehrzahl von Abtastpositionen (201) innerhalb eines Abtastbereiches (200) anzuordnen, **dadurch gekennzeichnet, dass** die Vorrichtung eine Steuereinheit (24) aufweist, die dazu ausgebildet ist, die Lichtintensität des Deaktivierungslichts in einem dem Abtastbereich (200) zugeordneten Fangbereich (210), in dem die Position des Moleküls (M) aus den Abtastpositionen (201) und den zugeordneten erfassten Photonen eindeutig ableitbar ist, maximal auf eine Sättigungsintensität einzustellen.

14. Vorrichtung (1) nach Anspruch 13, **dadurch gekennzeichnet, dass** die mindestens eine Strahlablenkeinrichtung (15a, 15b, 17) dazu ausgebildet ist, die Anregungslichtverteilung (100) relativ zu der Deaktivierungs-Lichtverteilung (300) umzupositionieren und das lokale Minimum (110) der Anregungslichtverteilung (100) mehrfach unterschiedlich innerhalb einer Umgebung des lokalen Intensitätsminimums (310) der Deaktivierungs-Lichtverteilung (300) zu positionieren.

15. Vorrichtung (1) nach Anspruch 13 oder 14, **dadurch gekennzeichnet, dass** die Vorrichtung (1) eine erste Strahlformungseinrichtung (16a) zum Erzeugen der Anregungslichtverteilung (100) und eine zweite Strahlformungseinrichtung (16b) zum von der Erzeugung der Anregungslichtverteilung (100) unabhängigen Erzeugen der Deaktivierungs-Lichtverteilung (300) aufweist.

## Claims

1. A method for determining positions of molecules (M) spaced apart from one another in one or more spatial directions in a sample (20) comprising the steps of:

   - generating (101) a plurality of light distributions, each light distribution comprising a local intensity minimum (110, 310) and intensity increasing regions (120, 320) adjacent thereto, the light distributions comprising an excitation light distribution (100) and a deactivation light distribution (300), particularly a STED light distribution,
   - illuminating (102) the sample (20) with the excitation light distribution (100) and the deactivation light distribution (300),
   - detecting (103) photons emitted by the molecule (M) for different positionings of the excitation light distribution (100), and
   - deriving (104) the position of the molecule (M) based on the photons detected for the different positionings of the excitation light distribution (100),

   wherein the local minimum (110) of the excitation light distribution (100) is successively arranged at a plurality of scanning positions (201) within a scanning region (200),
   **characterized in that**
   the light intensity of the deactivation light in a catch region (210) assigned to the scanning region (200), in which the position of the molecule (M) can be unambiguously derived from the scanning positions (201) and the associated detected photons, corresponds at most to a saturation intensity.

2. The method according to claim 1, **characterized in that** the excitation light distribution (100) is repositioned while the deactivation light distribution (300) is left stationary so that the local minimum (110) of the excitation light distribution (100) is positioned differently more than once within a vicinity of the local intensity minimum (310) of the deactivation light distribution (300).

3. The method according to claim 1, **characterized in that** the excitation light distribution (100) and the deactivation light distribution (300) are repositioned together.

4. The method according to one of the preceding claims, **characterized in that** a region between two local maxima (330) of the deactivation light distribution (300) adjacent to the local intensity minimum of the deactivation light distribution (300) is extended further, particularly at least 10% further, at least in one spatial direction than a corresponding region between two local maxima (130) of the excitation light distribution (100) adjacent to the local minimum (110) of the excitation light distribution (100).

5. The method according to one of the preceding claims, **characterized in that** a plurality of scanning steps is performed, wherein the local minimum of the excitation light distribution (100) in each of the scanning steps is positioned at a plurality of the scanning positions (201) of a respective scanning region (200), wherein the respective scanning region (200) of each scanning step comprises a smaller area or volume than the scanning regions of the preceding scanning steps, and the deactivation light distribution (300) is adjusted in at least a part of the scanning steps depending on the area or volume of the respective scanning area (200), wherein a total intensity and/or a shape of the deactivation light distribution (300) is adjusted depending on the area or volume of the respective scanning area (200).

6. The method according to one of the preceding claims, **characterized in that** the deactivation light distribution (300) remains constant during repositioning of the excitation light distribution (100).

7. The method according to one of the preceding claims, **characterized in that** the deactivation light distribution (300) is formed as a 2D donut or a 3D donut.

8. The method according to claim 7, **characterized in that** the 2D donut is generated by phase modulation of the deactivation light with a first phase pattern (610), the first phase pattern (610) comprising a phase increasing in a circumferential direction with respect to an optical axis, particularly continuously, from 0 to $2\pi \cdot n$, wherein $n$ is a natural number greater than 1.

9. The method according to one of the preceding claims, **characterized in that** the deactivation light distribution (300) is formed by irradiating a deactivation light beam (D) onto the sample (20) along an optical axis (OA), wherein the deactivation light beam (D) is focused into the sample (20) by means of an objective (19), and wherein a beam cross-section of the deactivation light beam (D) is adjusted such that a pupil (19a) of the objective lens (19) is under-illuminated so that the deactivation light distribution (300) is stretched in the direction of the optical axis (OA).

10. The method according to claim 9, **characterized in that** the beam cross-section of the deactivation light beam is adjusted by adapting an active surface (160) of a beam shaping device (16a, 16b), particularly a light modulator.

11. The method according to claim 10, **characterized in that**

    a. an orientation of a blazed grating in an outer region (161) of the active surface of the beam shaping device (16a, 16b) is adjusted, or
    b. a second phase pattern (611) is generated on the active surface of the beam shaping device (16a, 16b), particularly wherein the second phase pattern (611) is formed as a ring (603) extending in a circumferential direction to the optical axis (OA), particularly wherein the ring comprises a plurality of segments (604),

    wherein adjacent segments (604) respectively comprise a phase difference of $\pi$ to each other.

12. The method according to claim 9 or 10, **characterized in that** the deactivation light beam (D) is formed at least approximately as a Bessel beam, particularly by means of an axicon or a light modulator.

13. A device (1), particularly a microscope, for determining positions of molecules (M) spaced apart from one another in one or more spatial directions in a sample (20), particularly according to a method according to one of the claims 1 to 12, comprising

    a. at least one light source (11,12) for generating an excitation light beam (A) and a deactivation light beam (D), particularly a STED beam,
    b. at least one beam shaping device (16a, 16b) for forming an excitation light distribution (100) from the excitation light beam (A) and a deactivation light distribution (300) from the deactivation light beam (D), wherein the excitation light distribution (100) and the deactivation light distribution (300) each comprise a local intensity minimum (110, 310) and intensity increasing regions (120, 320) adjacent thereto,
    c. an optical arrangement (2) for illuminating the sample (20) with the excitation light distribution (100) and the deactivation light distribution (300),
    d. at least one detector (22) for detecting photons emitted by the molecule (M) for different positionings of the excitation light distribution (100), and
    e. a computing unit (23) for deriving the position of the molecule (M) based on the photons detected for the different positionings of the excitation light distribution (100),
    wherein the device (1) comprises at least one beam deflection device (15a, 15b, 17) configured to successively arrange the local minimum of the excitation light distribution (100) at a plurality of scanning positions (201) within a scanning region (200),
    **characterized in that**
    the device comprises a control unit (24) configured to adjust the light intensity of the deactivation light in a catch region (210) assigned to the scanning region (200), in which the position of the molecule (M) can be unambiguously derived from the scanning positions (201) and the associated detected photons, to at most a saturation intensity.

14. The device (1) according to claim 13, **characterized in that** the at least one beam deflection device (15a, 15b, 17) is configured to reposition the excitation light distribution (100) relative to the deactivation light distribution (300) and to position the local minimum (110) of the excitation light distribution (100) differently more than once within a vicinity of the local intensity minimum (310) of the deactivation light distribution (300).

15. The device (1) according to claim 13 or 14, **characterized in that** the device (1) comprises a first beam shaping device (16a) for generating the excitation light distribution (100) and a second beam shaping device (16b) for generating the deactivation light distribution (300) independently of the generation of the excitation light distribution (100).

**Revendications**

1. Procédé pour déterminer les positions de molécules (M) espacées les unes des autres dans une ou plusieurs directions spatiales dans un échantillon (20), comprenant les étapes consistant à :

   - générer (101) une pluralité de distributions de lumière, chaque distribution de lumière ayant un minimum local d'intensité (110, 310) et des zones d'augmentation d'intensité (120, 320) adjacentes à celui-ci, les distributions de lumière comprenant une distribution de lumière d'excitation (100) et une distribution de lumière de désactivation (300), en particulier une distribution de lumière STED,
   - illuminer (102) l'échantillon (20) avec la distribution de lumière d'excitation (100) et la distribution de lumière de désactivation (300),
   - détecter (103) photons émis par la molécule (M) pour différents positionnements de la distribution de lumière d'excitation (100), et
   - dériver (104) la position de la molécule (M) sur la base des photons détectés pour les différents positionnements de la distribution de lumière d'excitation (100),
   dans lequel le minimum local (110) de la distribution de lumière d'excitation (100) est placé successivement à une pluralité de positions de balayage (201) dans une zone de balayage (200),
   **caractérisé en ce que**
   l'intensité lumineuse de la lumière de désactivation correspond au maximum à une intensité de saturation dans une zone de capture (210) associée à la zone de balayage (200), dans laquelle la position de la molécule (M) peut être déduite sans équivoque des positions de balayage (201) et des photons détectés associés dans la zone de capture.

2. Procédé selon la revendication 1, **caractérisé en ce que** la distribution de lumière d'excitation (100) est repositionnée tout en laissant la distribution de lumière de désactivation (300) fixe, de sorte que le minimum local (110) de la distribution de lumière d'excitation (100) est positionné différemment plusieurs fois à l'intérieur d'un voisinage du minimum local d'intensité (310) de la distribution de lumière de désactivation (300).

3. Procédé selon la revendication 1, **caractérisé en ce que** la distribution de lumière d'excitation (100) et la distribution de lumière de désactivation (300) sont repositionnées ensemble.

4. Procédé selon l'une des revendications précédentes, **caractérisé en ce qu'**une zone entre deux maxima locaux (330) de la distribution de lumière de désactivation (300) adjacents au minimum local d'intensité de la distribution de lumière de désactivation (300) est plus étendue, au moins dans une direction spatiale, en particulier au moins 10 % plus étendue, qu'une zone correspondante entre deux maxima locaux (130) de la distribution de lumière d'excitation (100) adjacents au minimum local (110) de la distribution de lumière d'excitation (100).

5. Procédé selon l'une des revendications précédentes, **caractérisé en ce qu'**une pluralité d'étapes de balayage est réalisée, le minimum local de la distribution de lumière d'excitation (100) étant positionné dans chacune des étapes de balayage à une pluralité des positions de balayage (201) d'une zone de balayage respective (200), la zone de balayage respective (200) de chaque étape de balayage présentant une surface ou un volume inférieur(e) aux zones de balayage (200) des étapes de balayage précédentes, et la distribution de lumière de désactivation (300) est adaptée dans au moins une partie des étapes de balayage en fonction de la surface ou du volume de la zone de balayage respective (200), une intensité totale et/ou une forme de la distribution de lumière de désactivation (300) étant adaptée en fonction de la surface ou du volume de la zone de balayage respective (200).

6. Procédé selon l'une des revendications précédentes, **caractérisé en ce que** la distribution de lumière de désactivation (300) reste constante pendant le repositionnement de la distribution de lumière d'excitation (100).

7. Procédé selon l'une des revendications précédentes, **caractérisé en ce que** la distribution de lumière de désactivation (300) est formée comme un donut 2D ou un donut 3D.

8. Procédé selon la revendication 7, **caractérisé en ce que** le donut 2D est généré par modulation de phase de la lumière de désactivation avec un premier motif de phase (610), le premier motif de phase (610) ayant une phase augmentant dans une direction circonférentielle par rapport à un axe optique, en particulier de manière continue, de 0 à 2n · $\pi$, où *n* est un nombre naturel qui est supérieur à 1.

9. Procédé selon l'une des revendications précédentes, **caractérisé en ce que** la distribution de lumière de désactivation (300) est formée en projetant un faisceau de lumière de désactivation (D) sur l'échantillon (20) le long d'un axe optique (OA), le faisceau de lumière de désactivation (D) étant focalisé dans l'échantillon (20) au moyen d'un objectif (19), et dans lequel une section transversale du faisceau lumineux de désactivation (D) est adaptée de telle sorte qu'une pupille (19a) de l'objectif (19) est sous-éclairée, de sorte que la distribution de lumière de désactivation (300) est étirée dans la direction de l'axe optique (OA).

10. Procédé selon la revendication 9, **caractérisé en ce que** la section transversale du faisceau lumineux de désactivation est adaptée en adaptant une surface active (160) d'un dispositif de formation de faisceau (16a, 16b), en particulier un modulateur de lumière.

11. Procédé selon la revendication 10, **caractérisé en ce que**

    - une orientation d'un réseau de Blaze dans une zone extérieure (161) de la surface active du dispositif de formation de faisceau (16a, 16b) est ajustée ou
    - un second motif de phase (611) est généré sur la surface active du dispositif de formation de faisceau (16a, 16b), en particulier dans lequel le second motif de phase (611) est formé comme un anneau (603) s'étendant dans une direction circonférentielle par rapport à l'axe optique (OA), en particulier dans lequel l'anneau (603) comprend une pluralité de segments (604), des segments adjacents (604) ayant chacun une différence de phase de $\pi$ les uns par rapport aux autres.

12. Procédé selon la revendication 9 ou 10, **caractérisé en ce que** le faisceau lumineux de désactivation (D) est formé au moins approximativement comme un faisceau de Bessel, en particulier au moyen d'un axicon ou d'un modulateur de lumière.

13. Dispositif (1), en particulier microscope, pour déterminer des positions de molécules (M) espacées les unes des autres dans une ou plusieurs directions spatiales dans un échantillon (20), en particulier selon un procédé selon l'une des revendications 1 à 12, comprenant

    - au moins une source lumineuse (11, 12) pour générer un faisceau lumineux d'excitation (A) et un faisceau lumineux de désactivation (D), en particulier un faisceau lumineux STED,
    - au moins un dispositif de formation de faisceau (16a, 16b) pour former une distribution de lumière d'excitation (100) à partir du faisceau de lumière d'excitation (A) et une distribution de lumière de désactivation (300) à partir du faisceau de lumière de désactivation (D), la distribution de lumière d'excitation (100) et la distribution de lumière de désactivation (300) présentant chacune un minimum d'intensité local (110, 310) et des zones d'augmentation d'intensité (120, 320) adjacentes à celui-ci,

    - un agencement optique (2) pour illuminer l'échantillon (20) avec la distribution de lumière d'excitation (100) et la distribution de lumière de désactivation (300),
    - au moins un détecteur (22) pour détecter des photons émis par la molécule (M) pour différents positionnements de la distribution de lumière d'excitation (100), et
    - une unité de calcul (23) pour dériver la position de la molécule (M) sur la base des photons détectés pour les différents positionnements de la distribution de lumière d'excitation (100), dans lequel le dispositif (1) comprend au moins un dispositif de déviation de faisceau (15a, 15b, 17) qui est conçu pour disposer le minimum local de la distribution de lumière d'excitation (100) successivement à une pluralité de positions de balayage (201) à l'intérieur d'une zone de balayage (200), **caractérisé en ce** le dispositif présente une unité de commande (24) qui est conçue pour régler l'intensité lumineuse de la lumière de désactivation au maximum à une intensité de saturation dans une zone de capture (210) associée à la zone de balayage (200), dans laquelle la position de la molécule (M) peut être déduite de manière univoque des positions de balayage (201) et des photons détectés associés dans la zone de capture (210).

14. Dispositif (1) selon la revendication 13, **caractérisé en ce que** le au moins un dispositif de déviation de faisceau (15a, 15b, 17) est conçu pour repositionner la distribution de lumière d'excitation (100) par rapport à la distribution de lumière de désactivation (300) et pour positionner le minimum local (110) de la distribution de lumière d'excitation (100) différemment plusieurs fois à l'intérieur d'un voisinage du minimum local d'intensité (310) de la distribution de lumière de désactivation (300).

15. Dispositif (1) selon la revendication 13 ou 14, **caractérisé en ce que** le dispositif (1) comprend un premier dispositif de formation de faisceau (16a) pour générer la distribution de lumière d'excitation (100) et un deuxième dispositif de formation de faisceau (16b) pour générer la distribution de lumière de désactivation (300) indépendamment de la génération de la distribution de lumière d'excitation (100).

Fig. 1

Fig. 2

Fig. 3

EP 4 158 316 B1

Fig. 4

Fig. 5

Fig. 6A

Fig. 6B

Fig. 6C

Fig. 6D

Fig. 7A

Fig. 7B

Fig. 7C

Fig. 7D

Fig. 8A

Fig. 8B

Fig. 8C

Fig. 8D

Fig. 9A

Fig. 9B

Fig. 9C

Fig. 9D

Fig. 10A

Fig. 10B

Fig. 10C

Fig. 10D

Fig. 10E

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011055367 A1
- WO 2015052186 A1
- DE 102013114860
- DE 102017104736 A1
- EP 3372989 A1
- WO 2020198750 A1
- EP 3055674 B1
- US 20140042340 A1
- CN 111024658 A
- WO 2019221622 A1

**In der Beschreibung aufgeführte Nicht-Patentliteratur**

- **VERÖFFENTLICHUNG BALZAROTTI F** ; **EILERS Y** ; **GWOSCH KC** ; **GYNNÅ, A** ; **WESTPHAL V** ; **STEFANI F** ; **ELF J** ; **HELL SW**. Nanometer resolution imaging and tracking of fluorescent molecules with minimal photon fluxes. *arXiv:1611.03401 [physics.optics*, 2016
- Stimulated emission depletion microscopy with array detection and photon reassignment. **VON WANG WENSHENG**. Optics and Lasers in Engineering. Elsevier, 18 February 2020, vol. 129
- **P. ZHANG** ; **P. GOODWIN,** ; **J. WERNER**. Fast, super resolution imaging via Bessel beam stimulated emission depletion microscopy'. *Opt. Expr.*, 2014, vol. 22, 12398
- **W. YU,** ; **Z. JI** ; **D. DONG** ; **X. YANG** ; **Y. XIAO** ; **X. GONG** ; **P. XI** ; **K. SHI**. Super-resolution deep imaging with hollow Bessel beam STED microscopy. *Laser & Photonics Review*, January 2016, vol. 10 (1), 146-152